(19) Europäisches Patentamt
European Patent Office
Office européen des brevets

(11) EP 2 023 724 B1

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(21) Anmeldenummer: **07725290.6**

(22) Anmeldetag: **16.05.2007**

(51) Int Cl.:
***A01N 43/40*** *(2006.01)* ***A01N 47/12*** *(2006.01)*
***A01N 43/653*** *(2006.01)* ***A01N 43/36*** *(2006.01)*
***A01N 37/50*** *(2006.01)* ***A01N 37/46*** *(2006.01)*
***A01P 7/00*** *(2006.01)* ***A01P 3/00*** *(2006.01)*

(86) Internationale Anmeldenummer:
**PCT/EP2007/004375**

(87) Internationale Veröffentlichungsnummer:
**WO 2007/134778 (29.11.2007 Gazette 2007/48)**

(54) **SYNERGISTISCHE WIRKSTOFFKOMBINATIONEN**

SYNERGISTIC ACTIVE INGREDIENT COMBINATIONS

COMBINAISONS DE PRINCIPES ACTIFS AYANT UN EFFET DE SYNERGIE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.05.2006 DE 102006023263**

(43) Veröffentlichungstag der Anmeldung:
**18.02.2009 Patentblatt 2009/08**

(73) Patentinhaber: **Bayer CropScience Aktiengesellschaft
40789 Monheim (DE)**

(72) Erfinder:
- **JESCHKE, Peter
51467 Bergisch Gladbach (DE)**
- **VELTEN, Robert
40764 Langenfeld (DE)**
- **SCHENKE, Thomas
51469 Bergisch Gladbach (DE)**
- **ANDERSCH, Wolfram
51469 Berigsch Gladbach (DE)**
- **HUNGENBERG, Heike
40764 Langenfeld (DE)**
- **THIELERT, Wolfgang
51519 Odenthal (DE)**

(56) Entgegenhaltungen:
**EP-A- 0 539 588**
**WO-A-2004/080181**
**WO-A-2005/034628**
**WO-A-2005/041653**
**WO-A-2006/037475**
**WO-A-2006/040016**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 023 724 B1

## Beschreibung

Die vorliegende Erfindung betrifft neue Wirkstoffkombinationen, die eine bekannte Verbindung der Formel (I) einerseits und mindestens einen bekannten fungiziden Wirkstoff andererseits enthalten und sehr gut zur Bekämpfung von unerwünschten tierischen Schädlingen wie Insekten sowie unerwünschten phytopathogenen Pilzen geeignet sind.

Es ist bereits bekannt, dass Verbindungen der Formel (I) insektizide Wirkung aufweisen (vgl. EP 0 539 588 A1). Ferner ist aus WO 2006/037475 bekannt, dass sich bestimmte Verbindungen der Formel (I) zur Saatgutbehandlung eignen, insbesondere werden das Saatgut und die daraus hervorgehenden Pflanzen nach dem Auflaufen vor Schädlingen geschützt. WO 2006/037475 beschreibt ferner, dass eine Verbindung der Formel (I) alleine oder in einer geeigneten Formulierung auf das Saatgut aufgebracht wird. WO 2006/037475 schlägt im Bereich der Tiergesundheit und des Pflanzenschutzes keine WirkstofFskombinationen vor, während sie im Bereich der Haushaltsinsektizide beschreibt, dass die Anwendung auch in Kombination mit anderen geeigneten Wirkstoffen wie Phosporsäureestern, Carbamaten, Pyrethroidem Wachstumsregulatoren oder Wirkstoffen aus anderen bekannten Insektizidklassen erfolgen kann.

Weiterhin ist schon bekannt, dass zahlreiche Triazol-Derivate, Anilin-Derivate, Dicarboximide und andere Heterocyclen zur Bekämpfung von Pilzen eingesetzt werden können (vgl. EP-A 0 040 345, DE-A 22 01063, DE-A 23 24 010, Pesticide Manual, 9th. Edition (1991), Seiten 249 und 827, EP-A 0 382 375, EP-A 0 515 901, DE-B2 2732257). Auch die Wirkung dieser Stoffe ist aber bei niedrigen Aufwandmengen nicht immer ausreichend.

Ferner ist bereits bekannt, dass 1-(3,5-Dimethyl-isoxazol-4-sulfonyl)-2-chlor-6,6-difluor-[1,3]-dioxolo-[4,5f]-benzimidazol fungizide Eigenschaften besitzt (vgl. WO 97/06171).

Schließlich ist auch bekannt, dass substituierte Halogenpyrimidine fungizide Eigenschaften besitzen (vgl. DE-A1-196 46 407, EP-B-712 396).

Es wurden nun neue Wirkstoffkombinationen mit sehr guten insektiziden und fungiziden Eigenschaften gefunden, enthaltend mindestens eine Verbindung der Formel (I) (Gruppe 1)

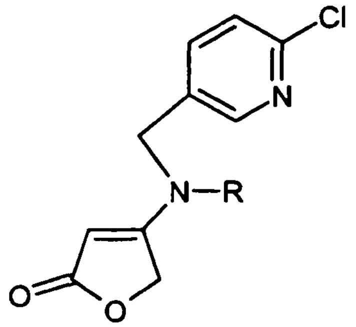

(I)

wobei

R für Methyl oder Cyclopropyl steht,

und mindestens einen Wirkstoff, der aus den folgenden Gruppen (2), (3), (8), (11) und (16) ausgewählt ist:

<u>Gruppe (2) Strobilurine :</u>

(2-1) Azoxystrobin (bekannt aus EP-A 0 382 375) der Formel

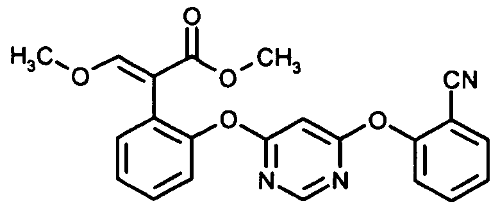

(2-2) Fluoxastrobin (bekannt aus DE-A 196 02 095) der Formel

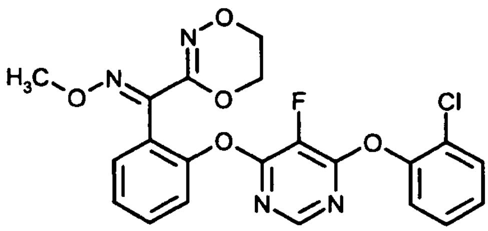

(2-3) (2*E*)-2-(2-{[6-(3-Chlor-2-methylphenoxy)-5-fluor-4-pyrimidinyl]oxy}phenyl)-2-(methoxyimino)-*N*-methylethanamid (bekannt aus DE-A 196 46 407, EP-B 0 712 396) der Formel

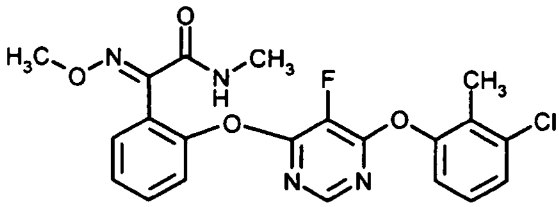

(2-4) Trifloxystrobin (bekannt aus EP-A 0 460 575) der Formel

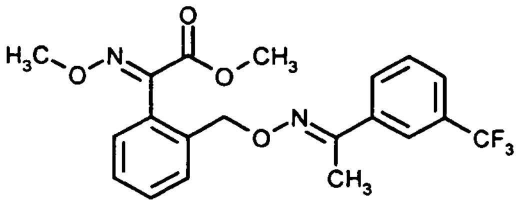

(2-5) (2*E*)-2-(Methoxyimino)-*N*-methyl-2-(2-{[({(1*E*)-1-[3-(trifluoromethyl)phenyl]ethyliden}-amino)oxy]methyl}phenyl)ethanamid (bekannt aus EP-A 0 569 384) der Formel

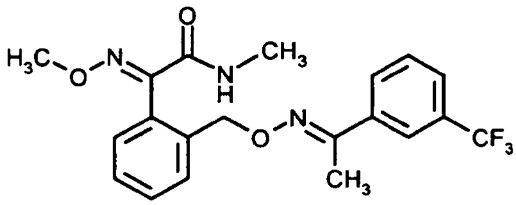

(2-6) (2*E*)-2-(Methoxyimino)-*N*-methyl-2-{2-[(*E*)-({1-[3-(trifluormethyl)phenyl]ethoxy}imino)-methyl]phenyl}ethanamid (bekannt aus EP-A 0 596 254) der Formel

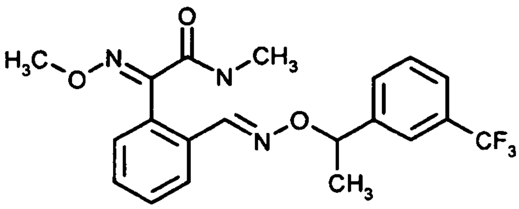

(2-7) Orysastrobin (bekannt aus DE-A 195 39 324) der Formel

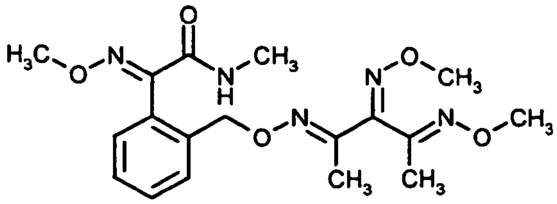

(2-8) 5-Methoxy-2-methyl-4-(2-{[({(1*E*)-1-[3-(trifluormethyl)phenyl]ethyliden}amino)oxy]-methyl}phenyl)-2,4-dihydro-3*H*-1,2,4-triazol-3-on (bekannt aus WO 98/23155) der Formel

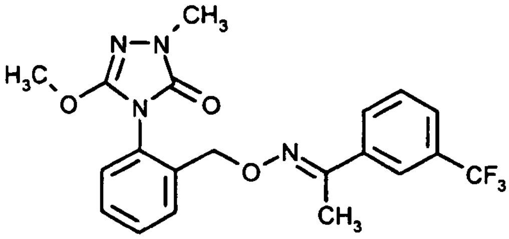

(2-9) Kresoxim-methyl (bekannt aus EP-A 0 253 213) der Formel

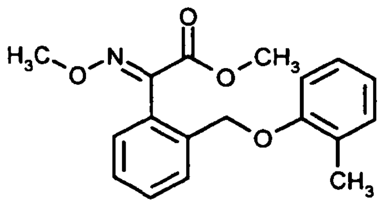

(2-10) Dimoxystrobin (bekannt aus EP-A 0 398 692) der Formel

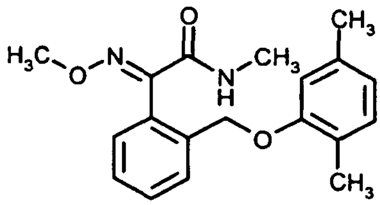

(2-11) Picoxystrobin (bekannt aus EP-A 0 278 595) der Formel

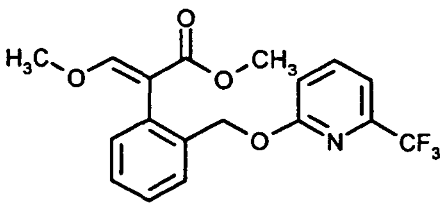

(2-12) Pyraclostrobin (bekannt aus DE-A 44 23 612) der Formel

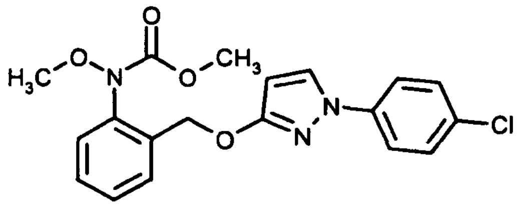

(2-13) Metominostrobin (bekannt aus EP-A 0 398 692) der Formel

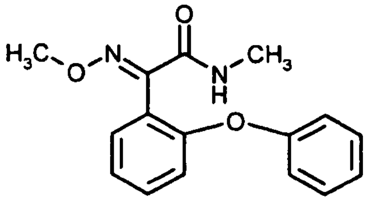

Gruppe (3) Triazole:

(3-1) Azaconazole (bekannt aus DE-A 25 51 560) der Formel

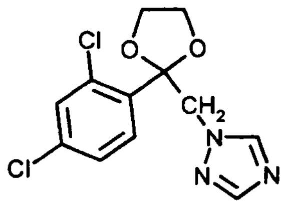

(3-2) Etaconazole (bekannt aus DE-A 25 51 560) der Formel

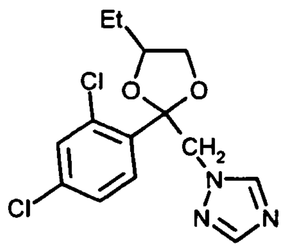

(3-3) Propiconazole (bekannt aus DE-A 25 51 560) der Formel

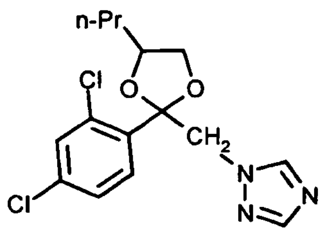

(3-4) Difenoconazole (bekannt aus EP-A 0 112 284) der Formel

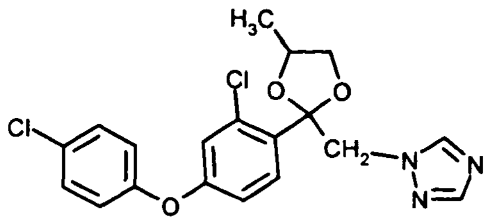

(3-5) Bromuconazole (bekannt aus EP-A 0 258 161) der Formel

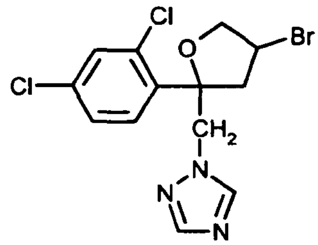

(3-6) Cyproconazole (bekannt aus DE-A 34 06 993) der Formel

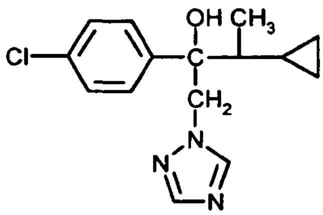

(3-7) Hexaconazole (bekannt aus DE-A 30 42 303) der Formel

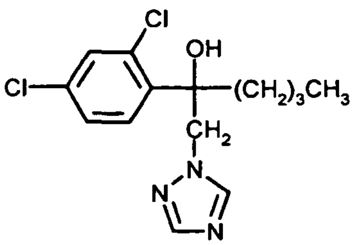

(3-8) Penconazole (bekannt aus DE-A 27 35 872) der Formel

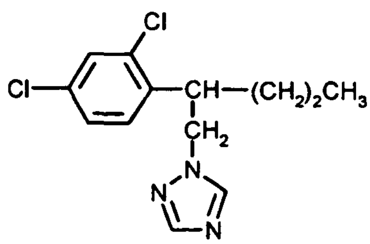

(3-9) Myclobutanil (bekannt aus EP-A 0 145 294) der Formel

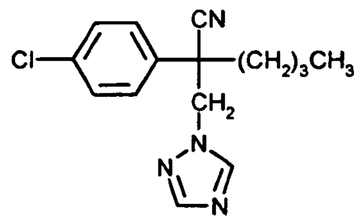

(3-10) Tetraconazole (bekannt aus EP-A 0 234 242) der Formel

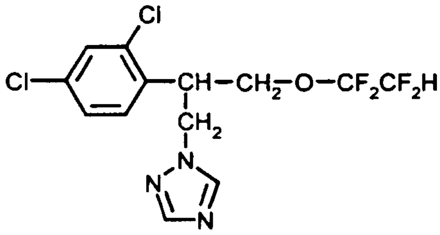

(3-11) Flutriafol (bekannt aus EP-A 0 015 756) der Formel

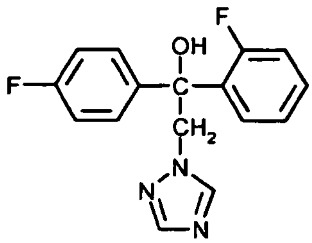

(3-12) Epoxiconazole (bekannt aus EP-A 0 196 038) der Formel

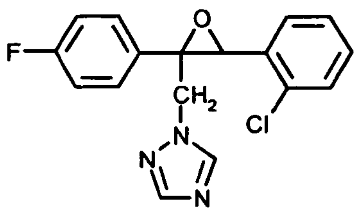

(3-13) Flusilazole (bekannt aus EP-A 0 068 813) der Formel

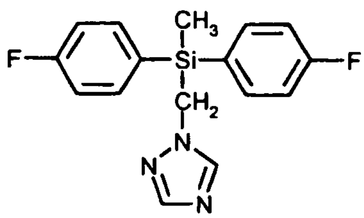

(3-14) Simeconazole (bekannt aus EP-A 0 537 957) der Formel

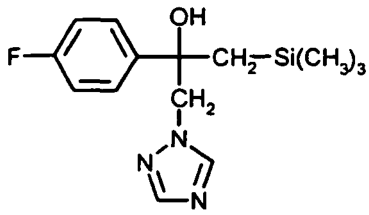

(3-15) Prothioconazole (bekannt aus WO 96/16048) der Formel

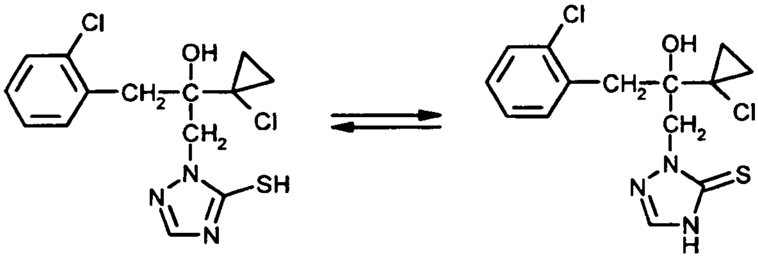

(3-16) Fenbuconazole (bekannt aus DE-A 37 21 786) der Formel

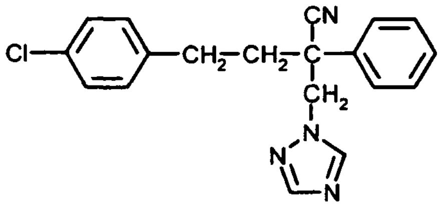

(3-17) Tebuconazole (bekannt aus EP-A 0 040 345) der Formel

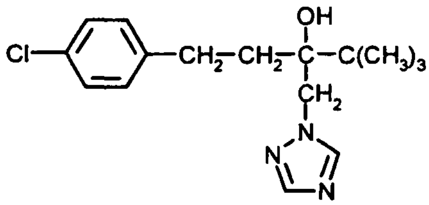

(3-18) Ipconazole (bekannt aus EP-A 0 329 397) der Formel

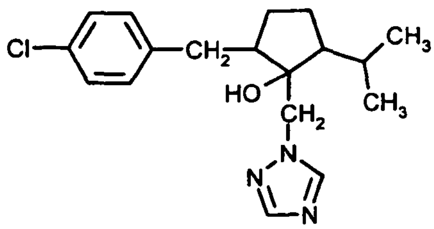

(3-19) Metconazole (bekannt aus EP-A 0 329 397) der Formel

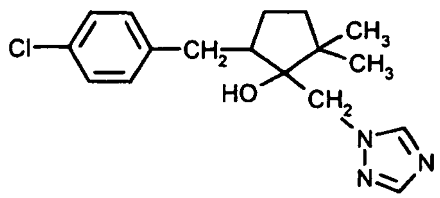

(3-20) Triticonazole (bekannt aus EP-A 0 378 953) der Formel

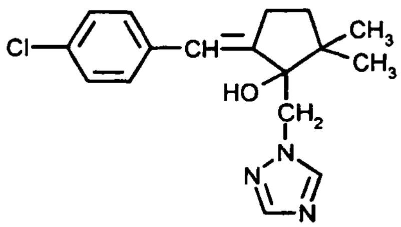

(3-21) Bitertanol (bekannt aus DE-A 2324010) der Formel

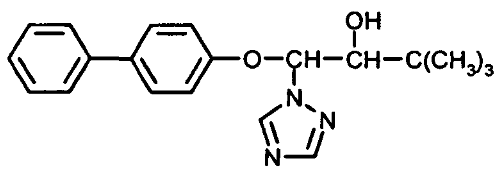

(3-22) Triadimenol (bekannt aus DE-A 2324010) der Formel

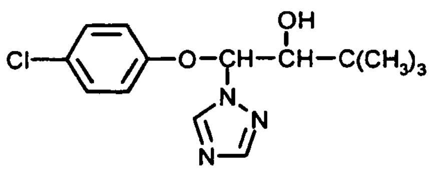

(3-23) Triadimefon (bekannt aus DE-A 22 01 063) der Formel

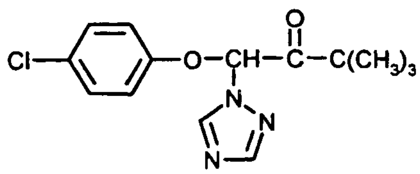

(3-24) Fluquinconazole (bekannt aus EP-A 0 183 458) der Formel

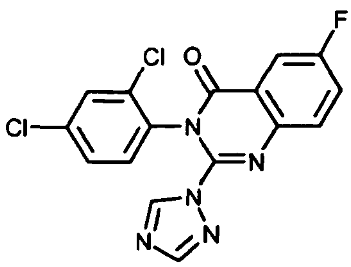

(3-25) Quinconazole (bekannt aus EP-A 0 183 458) der Formel

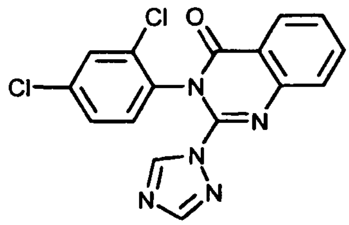

Gruppe (8) Acylalanine:

(8-1) Benalaxyl (bekannt aus DE-A 29 03 612) der Formel

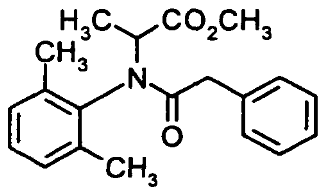

(8-2) Furalaxyl (bekannt aus DE-A 25 13 732) der Formel

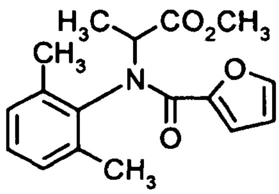

(8-3) Metalaxyl (bekannt aus DE-A 25 15 091) der Formel

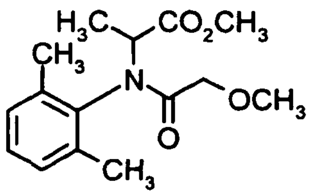

(8-4) Metalaxyl-M (bekannt aus WO 96/01559) der Formel

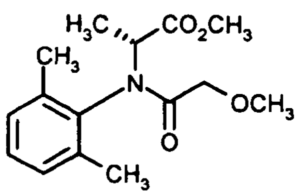

(8-5) Benalaxyl-M der Formel

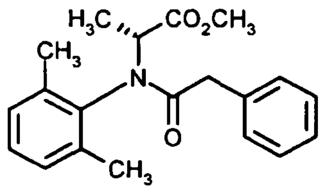

Gruppe (11): Carbamate:

(11-1) Diethofencarb (bekannt aus EP-A 0 078 663) der Formel

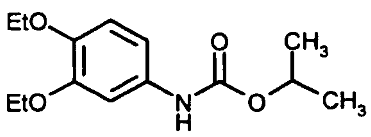

(11-2) Propamocarb (bekannt aus US 3,513,241) der Formel

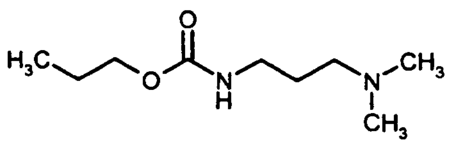

(11-3) Propamocarb-hydrochloride (bekannt aus US 3,513,241) der Formel

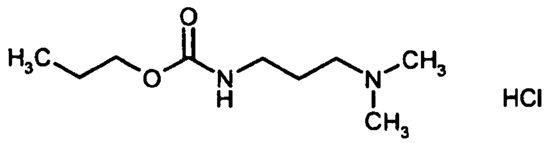

(11-4) Propamocarb-Fosetyl der Formel

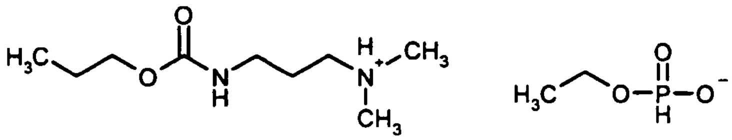

Gruppe (16): Pyrrole:

(16-1) Fenpiclonil (bekannt aus EP-A 0 236 272) der Formel

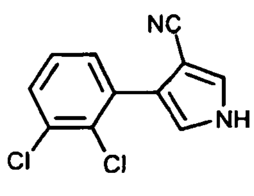

(16-2) Fludioxonil (bekannt aus EP-A 0 206 999) der Formel

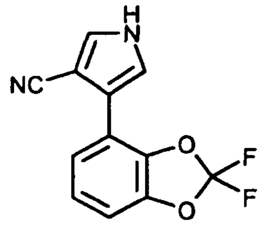

(16-3) Pyrrolnitrine (bekannt aus JP 65-25876) der Formel

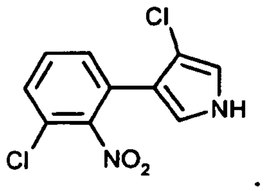

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Überraschenderweise ist die insektizide Wirkung der erfindungsgemäßen Wirkstoffkombinationen ebenfalls wesentlich höher als die Summe der Wirkungen der einzelnen Wirkstoffe. Es liegt also ein nicht vorhersehbarer, echter synergistischer Effekt vor und nicht nur eine Wirkungsergänzung.

Die Formel (I) umfasst folgende bevorzugte Mischungspartner:

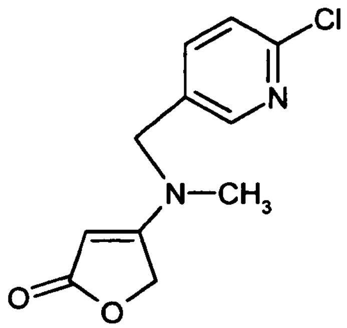

(Ia): 4-[[(6-Chlorpyridin-3-yl)methyl](methylamino)]furan-2-(5H)-on

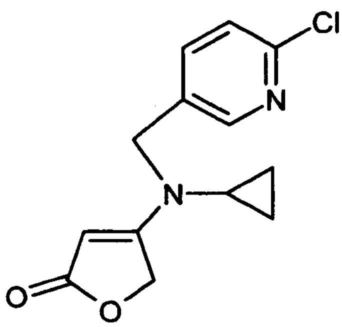

(Ib): 4-[[(6-Chlorpyridin-3-yl)methyl](cyclopropylamino)]furan-2-(5H)-on

Hervorgehoben sind erfindungsgemäße Wirkstoffkombinationen, die neben der Verbindung der Formel (Ia) einen oder mehrere, bevorzugt einen, Wirkstoff der Gruppen (2), (3), (8), (11) und (16) enthalten.

Hervorgehoben sind erfindungsgemäße Wirkstoffkombinationen, die neben der Verbindung der Formel (Ib)

einen oder mehrere, bevorzugt einen, Wirkstoff der Gruppen (2), (3), (8), (11) und (16) enthalten.

Hervorgehoben sind Wirkstoffkombinationen enthaltend die Verbindung der Formel (Ia)

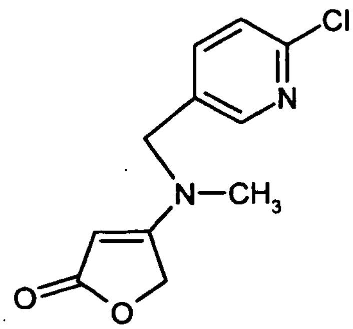

(Ia)

und eine Verbindung ausgewählt aus der Gruppe (2) und (3).

Ebenfalls hervorgehoben sind Wirkstoffkombinationen enthaltend die Verbindung der Formel (Ib)

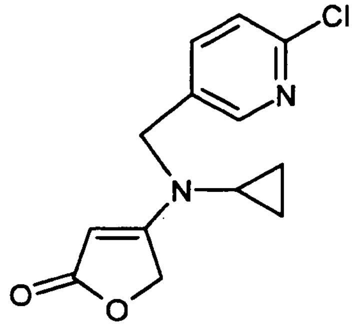

(Ib)

und eine Verbindung ausgewählt aus den Gruppen (2), (3), (8), (11) und (16).

Als Wirkstoff der Gruppen (2), (3), (8), (11) und (16) sind die folgenden Wirkstoffe besonders bevorzugt:

(2-1) Azoxystrobin
(2-2) Fluoxastrobin
(2-3) (2*E*)-2-(2-{[6-(3-Chlor-2-methylphenoxy)-5-fluor-4-pyrimidinyl]oxy}phenyl)-2-(methoxyimino)-*N*-methylethanamid
(2-4) Trifloxystrobin
(2-5) (2*E*)-2-(Methoxyimino)-*N*-methyl-2-(2-{[({(1*E*)-1-[3-(trifluormethyl)phenyl]ethyliden}amino)oxy]methyl}phenyl) ethanamid
(2-6) (2E)-2-(Methoxyimino)-*N*-methyl-2-{2-[(*E*)-({1-[3-(trifluormethyl)phenyl]-ethoxy}imino)methyl]phenyl}ethanamid
(2-8) 5-Methoxy-2-methyl-4-(2-{[({(1*E*)-1-[3-(trifluormethyl)phenyl]ethyliden}-amino)oxy]methyl}phenyl)-2,4-dihydro-3*H*-1,2,4-triazol-3-on
(2-9) Kresoxim-methyl
(2-10) Dimoxystrobin
(2-11) Picoxystrobin
(2-12) Pyraclostrobin
(2-13) Metominostrobin
(3-3) Propiconazole
(3-4) Difenoconazole
(3-6) Cyproconazole
(3-7) Hexaconazole
(3-8) Penconazole
(3-9) Myclobutanil
(3-10) Tetraconazole
(3-12) Epoxiconazole
(3-13) Flusilazole

(3-15) Prothioconazole
(3-16) Fenbuconazole
(3-17) Tebuconazole
(3-18) Ipconazole
(3-19) Metconazole
(3-20) Triticonazole
(3-21) Bitertanol
(3-22) Triadimenol
(3-23) Triadimefon
(3-24) Fluquinconazole
(8-1) Benalaxyl
(8-2) Furalaxyl
(8-3) Metalaxyl
(8-4) Metalaxyl-M
(8-5) Benalaxyl-M
(11-1) Diethofencarb
(11-2) Propamocarb
(11-3) Propamocarb-hydrochloride
(11-4) Propamocarb-Fosetyl
(16-2) Fludioxonil

Als Wirkstoff der Gruppen (2), (3), (8), (11) und (16) sind die folgenden Wirkstoffe ganz besonders bevorzugt:

(2-2) Fluoxastrobin
(2-3) (2*E*)-2-(2-{[6-(3-Chlor-2-methylphenoxy)-5-fluor-4-pyrimidinyl]oxy}phenyl)-2-(methoxyimino)-*N*-methylethanamid
(2-4) Trifloxystrobin
(3-15) Prothioconazole
(3-17) Tebuconazole
(3-18) Ipconazole
(3-20) Triticonazole
(3-21) Bitertanol
(3-22) Triadimenol
(3-24) Fluquinconazole
(8-3) Metalaxyl
(8-4) Metalaxyl-M
(8-5) Benalaxyl-M
(11-4) Propamocarb-Fosetyl
(16-2) Fludioxonil

Hervorzuhebende Wirkstoffkombinationen sind in der folgenden Tabelle aufgeführt.

| Wirkstoff der Gruppe 1 | Wirkstoff der Gruppen 2 bis 24 |
|---|---|
| (Ia) | (2-2) Fluoxastrobin |
| (Ia) | (2-4) Trifloxystrobin |
| (Ia) | (3-15) Prothioconazole |
| (Ia) | (3-17) Tebuconazole |
| (Ia) | (3-18) Ipconazole |
| (Ia) | (3-20) Triticonazole |
| (Ia) | (3-22) Triadimenol |
| (Ia) | (8-3) Metalaxyl |
| (Ia) | (8-4) Metalaxyl-M |
| (Ib) | (2-2) Fluoxastrobin |

(fortgesetzt)

| Wirkstoff der Gruppe 1 | Wirkstoff der Gruppen 2 bis 24 |
|---|---|
| (Ib) | (2-4) Trifloxystrobin |
| (Ib) | (3-15) Prothioconazole |
| (Ib) | (3-17) Tebuconazole |
| (Ib) | (3-18) Ipconazole |
| (Ib) | (3-20) Triticonazole |
| (Ib) | (3-22) Triadimenol |
| (Ib) | (8-3) Metalaxyl |
| (Ib) | (8-4) Metalaxyl-M |

Hervorgehobene Ausführungsformen der Erfindung zur Behandlung von Saatgut sind Mischungen enthaltend (Ia) und Fluoxastrobin (2-2) und/oder Trifloxystrobin (2-4) und/oder Prothioconazole (3-15) und/oder Tebuconazole (3-17) und/oder Ipconazole (3-18) und/oder Triticonazole (3-20) und/oder Triadimenol (3-22) und/oder Metalaxyl (8-3) und/oder Metalaxyl-M (8-4).

Hervorgehobene Ausführungsformen der Erfindung zur Behandlung von Saatgut sind weiterhin Mischungen enthaltend (Ib) und Fluoxastrobin (2-2) und/oder Trifloxystrobin (2-4) und/oder Prothioconazole (3-15) und/oder Tebuconazole (3-17) und/oder Ipconazole (3-18) und/oder Triticonazole (3-20) und/oder Triadimenol (3-22) und/oder Metalaxyl (8-3) und/oder Metalaxyl-M (8-4)).

Die erfindungsgemäßen Wirkstoffkombinationen enthalten neben einem Wirkstoff der Formel (I) aus Gruppe 1 mindestens einen Wirkstoff von den Verbindungen der Gruppen (2), (3), (8), (11) und (16). Sie können darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im Allgemeinen enthalten die erfindungsgemäßen Kombinationen Wirkstoffe der Formel (I) und einen Mischpartner aus einer der Gruppen (2), (3), (8), (11) und (16) in den in der nachfolgenden Tabelle beispielhaft angegebenen Mischungsverhältnisse.

Die Mischungsverhältnisse basieren auf Gewichtsverhältnissen. Das Verhältnis ist zu verstehen als Wirkstoff der Formel (I) : Mischpartner

| Mischpartner | bevorzugtes Mischungsverhältnis | besonders bevorzugtes Mischungsverhältnis |
|---|---|---|
| Gruppe (2): Strobilurine | 125: 1 bis 1 : 2000 | 50:1 bis 1:1000 |
| Gruppe (3): Triazole | 125: 1 bis 1 : 2000 | 50:1 bis 1:1000 |
| Gruppe (8): Acylalanine | 125: 1 bis 1 :2000 | 50:1 bis 1:1000 |
| Gruppe (11): Carbamate | 500: 1 bis 1 : 25 | 250 : 1 bis 1 : 1 |
| Gruppe (16): Pyrrole | 125: 1 bis 1 :2000 | 50:1 bis 1:1000 |

Das Mischungsverhältnis ist in jedem Fall so zu wählen, dass eine synergistische Mischung erhalten wird. Die Mischungsverhältnisse zwischen der Verbindung der Formel (I) und einer Verbindung aus einer der Gruppen (2), (3), (8), (11) und (16) kann auch zwischen den einzelnen Verbindungen einer Gruppe variieren.

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung Phytophthora infestans, Plasmopara viticola und Botrytis cinerea.

Beispielhaft, aber nicht begrenzend, seien einige Erreger von pilzlichen und bakteriellen Erkrankungen, die unter die oben aufgezählten Oberbegriffe fallen, genannt:

Die erfindungsgemäßen Wirkstoffkombinationen weisen eine starke mikrobizide Wirkung auf und können zur Bekämpfung von unerwünschten Mikroorganismen, wie Fungi und Bakterien, im Pflanzenschutz und im Materialschutz eingesetzt werden.

Fungizide lassen sich Pflanzenschutz zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz zur Bekämpfung von Pseudomonadaceae, Rhizobiaceae, Enterobacteriaceae, Corynebacteriaceae und Streptomycetaceae einsetzen.

Beispielhaft aber nicht begrenzend seien einige Erreger von pilzlichen und bakteriellen Erkrankungen, die unter die oben aufgezählten Oberbegriffe fallen, genannt:

Erkrankungen, hervorgerufen durch Erreger des Echten Mehltaus wie z.B.

Blumeria-Arten, wie beispielsweise Blumeria graminis;

Podosphaera-Arten, wie beispielsweise Podosphaera leucotricha;

Sphaerotheca-Arten, wie beispielsweise Sphaerotheca fuliginea;

Uncinula-Arten, wie beispielsweise Uncinula necator;

Erkrankungen, hervorgerufen durch Erreger von Rostkrankheiten wie z.B.

Gymnosporangium-Arten, wie beispielsweise Gymnosporangium sabinae

Hemileia-Arten, wie beispielsweise Hemileia vastatrix;

Phakopsora-Arten, wie beispielsweise Phakopsora pachyrhizi und Phakopsora meibomiae;

Puccinia-Arten, wie beispielsweise Puccinia recondita;

Uromyces-Arten, wie beispielsweise Uromyces appendiculatus;

Erkrankungen, hervorgerufen durch Erreger der Gruppe der Oomyceten wie z.B.

Bremia-Arten, wie beispielsweise Bremia lactucae;

Peronospora-Arten, wie beispielsweise Peronospora pisi oder P. brassicae;

Phytophthora-Arten, wie beispielsweise Phytophthora infestans;

Plasmopara-Arten, wie beispielsweise Plasmopara viticola;

Pseudoperonospora-Arten, wie beispielsweise Pseudoperonospora humuli oder

Pseudoperonospora cubensis;

Pythium-Arten, wie beispielsweise Pythium ultimum;

Blattfleckenkrankheiten und Blattwelken, hervorgerufen durch z.B.

Alternaria-Arten, wie beispielsweise Alternaria solani;

Cercospora-Arten, wie beispielsweise Cercospora beticola;

Cladiosporum-Arten, wie beispielsweise Cladiosporium cucumerinum;

Cochliobolus-Arten, wie beispielsweise Cochliobolus sativus

(Konidienform: Drechslera, Syn: Helminthosporium);

Colletotrichum-Arten, wie beispielsweise Colletotrichum lindemuthanium;

Cycloconium-Arten, wie beispielsweise Cycloconium oleaginum;

Diaporthe-Arten, wie beispielsweise Diaporthe citri;

Elsinoe-Arten, wie beispielsweise Elsinoe fawcettii;

Gloeosporium-Arten, wie beispielsweise Gloeosporium laeticolor;

Glomerella-Arten, wie beispielsweise Glomerella cingulata;

Guignardia-Arten, wie beispielsweise Guignardia bidwelli;

Leptosphaeria-Arten, wie beispielsweise Leptosphaeria maculans;

Magnaporthe-Arten, wie beispielsweise Magnaporthe grisea;

Mycosphaerella-Arten, wie beispielsweise Mycosphaerelle graminicola;

Phaeosphaeria-Arten, wie beispielsweise Phaeosphaeria nodorum;

Pyrenophora-Arten, wie beispielsweise Pyrenophora teres;

Ramularia-Arten, wie beispielsweise Ramularia collo-cygni;

Rhynchosporium-Arten, wie beispielsweise Rhynchosporium secalis;

Septoria-Arten, wie beispielsweise Septoria apii;

Typhula-Arten, wie beispielsweise Typhula incarnata;

Venturia-Arten, wie beispielsweise Venturia inaequalis;

Wurzel- und Stengelkrankheiten, hervorgerufen durch z.B.

Corticium-Arten, wie beispielsweise Corticium graminearum;

Fusarium-Arten, wie beispielsweise Fusarium oxysporum;

Gaeumannomyces-Arten, wie beispielsweise Gaeumannomyces graminis;

Rhizoctonia-Arten, wie beispielsweise Rhizoctonia solani;

Tapesia-Arten, wie beispielsweise Tapesia acuformis;

Thielaviopsis-Arten, wie beispielsweise Thielaviopsis basicola;

Ähren- und Rispenerkrankungen (inklusive Maiskolben), hervorgerufen durch z.B.

Altemaria-Arten, wie beispielsweise Alternaria spp.;

Aspergillus-Arten, wie beispielsweise Aspergillus flavus;

Cladosporium-Arten, wie beispielsweise Cladosporium spp.;

Claviceps-Arten, wie beispielsweise Claviceps purpurea;

Fusarium-Arten, wie beispielsweise Fusarium culmorum;

Gibberella-Arten, wie beispielsweise Gibberella zeae;

Monographella-Arten, wie beispielsweise Monographella nivalis;

Erkrankungen, hervorgerufen durch Brandpilze wie z.B.

Sphacelotheca-Arten, wie beispielsweise Sphacelotheca reiliana;

Tilletia-Arten, wie beispielsweise Tilletia caries;

Urocystis-Arten, wie beispielsweise Urocystis occulta;

Ustilago-Arten, wie beispielsweise Ustilago nuda;

Fruchtfäule hervorgerufen durch z.B.

Aspergillus-Arten, wie beispielsweise Aspergillus flavus;

Botrytis-Arten, wie beispielsweise Botrytis cinerea;

Penicillium-Arten, wie beispielsweise Penicillium expansum;

Sclerotinia-Arten, wie beispielsweise Sclerotinia sclerotiorum;

Verticilium-Arten, wie beispielsweise Verticilium alboatrum;

Samen- und bodenbürtige Fäulen und Welken, sowie Sämlingserkrankungen, hervorgerufen durch z.B.

Fusarium-Arten, wie beispielsweise Fusarium culmorum;

Phytophthora Arten, wie beispielsweise Phytophthora cactorum;

Pythium-Arten, wie beispielsweise Pythium ultimum;

Rhizoctonia-Arten, wie beispielsweise Rhizoctonia solani;

Sclerotium-Arten, wie beispielsweise Sclerotium rolfsii;

Krebserkrankungen, Gallen und Hexenbesen, hervorgerufen durch z.B.

Nectria-Arten, wie beispielsweise Nectria galligena;

Welkeerkrankungen hervorgerufen durch z.B.

Monilinia-Arten, wie beispielsweise Monilinia laxa;

Deformationen von Blättern, Blüten und Früchten, hervorgerufen durch z.B.

Taphrina-Arten, wie beispielsweise Taphrina deformans;

Degenerationserkrankungen holziger pflanzen, hervorgerufen durch z.B.

Esca-Arten, wie beispielsweise Phaemoniella clamydospora;

Blüten- und Samenerkrankungen, hervorgerufen durch z.B.

Botrytis-Arten, wie beispielsweise Botrytis cinerea;

Erkrankungen von Pflanzenknollen, hervorgerufen durch z.B.

Rhizoctonia-Arten, wie beispielsweise Rhizoctonia solani;

Erkrankungen, hervorgerufen durch bakterielle Erreger wie z.B.

Xanthomonas-Arten, wie beispielsweise Xanthomonas campestris pv. oryzae;

Pseudomonas-Arten, wie beispielsweise Pseudomonas syringae pv. lachrymans;

Erwinia-Arten, wie beispielsweise Erwinia amylovora;

Bevorzugt können die folgenden Krankheiten von Soja-Bohnen bekämpft werden:

Pilzkrankheiten an Blättern, Stängeln, Schoten und Samen verursacht durch z.B.

Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi), Scab (Sphaceloma glycines), Stemphylium Leaf Blight (Stemphylium botryosum), Target Spot (Corynespora cassiicola).

Pilzkrankheiten an Wurzeln und der Stängelbasis verursacht durch z.B.

Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

Die gute Pflanzenverträglichkeit der Wirkstoffkombinationen in den zur Bekämpfung von Pflanzenkrankheiten notwendigen Konzentrationen erlaubt eine Behandlung von ganzen Pflanzen (oberirdische Pflanzenteile und Wurzeln), von Pflanz- und Saatgut, und des Bodens. Die erfindungsgemäßen Wirkstoffkombinationen können zur Blattapplikation oder auch als Beizmittel eingesetzt werden.

Die gute Pflanzenverträglichkeit der verwendbaren Wirkstoffe in den zur Bekämpfung von Pflanzenkrankheiten notwendigen Konzentrationen erlaubt eine Behandlung des Saatguts. Die erfindungsgemäßen Wirkstoffe können somit als Beizmittel eingesetzt werden.

Ein großer Teil des durch phytopathogene Pilze verursachten Schadens an Kulturpflanzen entsteht bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von phytopathogenen Pilzen, die Pflanzen nach dem Auflaufen schädigen, erfolgt in erster Linie durch die Behandlung des Bodens und der oberirdischen Pflanzenteile mit Pflanzenschutzmitteln. Aufgrund der Bedenken hinsichtlich eines möglichen Einflusses der Pflanzenschutzmittel auf die Umwelt und die Gesundheit von Menschen und Tieren gibt es Anstrengungen, die Menge der ausgebrachten Wirkstoffe zu vermindern.

Die Bekämpfung von phytopathogenen Pilzen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen oder zumindest deutlich verringern. Es ist weiterhin erstrebenswert, die Menge des eingesetzten Wirkstoffs dahingehend zu optimieren, dass das Saatgut und die keimende Pflanze vor dem Befall durch phytopathogene Pilze bestmöglich geschützt wird, ohne jedoch die Pflanze selbst durch den eingesetzten Wirkstoff zu schädigen. Insbesondere sollten Verfahren zur Behandlung von

Saatgut auch die intrinsischen fungiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von phytopathogenen Pilzen, indem das Saatgut mit einem erfindungsgemäßen Mittel behandelt wird.

Die Erfindung bezieht sich ebenfalls auf die Verwendung der erfindungsgemäßen Mittel zur Behandlung von Saatgut zum Schutz des Saatguts und der keimenden Pflanze vor phytopathogenen Pilzen.

Weiterhin bezieht sich die Erfindung auf Saatgut, welches zum Schutz vor phytopathogenen Pilzen mit einem erfindungsgemäßen Mittel behandelt wurde.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saatgut selbst, sondern auch die daraus hervorgehenden Pflanzen nach dem Auflaufen vor phytopathogenen Pilzen schützt. Auf diese Weise kann die unmittelbare Behandlung der Kultur zum Zeitpunkt der Aussaat oder kurz danach entfallen.

Ebenso ist es als vorteilhaft anzusehen, dass die erfindungsgemäßen Mischungen insbesondere auch bei transgenem Saatgut eingesetzt werden können.

Die erfindungsgemäßen Mittel eignen sich zum Schutz von Saatgut jeglicher Pflanzensorte, die in der Landwirtschaft, im Gewächshaus, in Forsten oder im Gartenbau eingesetzt wird. Insbesondere handelt es sich dabei um Saatgut von Getreide (wie Weizen, Gerste, Roggen, Hirse und Hafer), Mais, Baumwolle, Soja, Reis, Kartoffeln, Sonnenblume, Bohne, Kaffee, Rübe (z.B. Zuckerrübe und Futterrübe), Erdnuss, Gemüse (wie Tomate, Gurke, Zwiebeln und Salat), Rasen und Zierpflanzen. Besondere Bedeutung kommt der Behandlung des Saatguts von Getreide (wie Weizen, Gerste, Roggen und Hafer), Mais und Reis zu.

Im Rahmen der vorliegenden Erfindung wird das erfindungsgemäßes Mittel alleine oder in einer geeigneten Formulierung auf das Saatgut aufgebracht. Vorzugsweise wird das Saatgut in einem Zustand behandelt, in dem es so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z.B. mit Wasser behandelt und dann erneut getrocknet wurde.

Im Allgemeinen muss bei der Behandlung des Saatguts darauf geachtet werden, dass die Menge des auf das Saatgut aufgebrachten erfindungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Die erfindungsgemäßen Wirkstoffkombinationen weisen auch eine starke stärkende Wirkung in Pflanzen auf. Sie eignen sich daher zur Mobilisierung pflanzeneigener Abwehrkräfte gegen Befall durch unerwünschte Mikroorganismen.

Unter pflanzenstärkenden (resistenzinduzierenden) Stoffen sind im vorliegenden Zusammenhang solche Substanzen zu verstehen, die in der Lage sind, das Abwehrsystem von Pflanzen so zu stimulieren, dass die behandelten Pflanzen bei nachfolgender Inokulation mit unerwünschten Mikroorganismen weitgehende Resistenz gegen diese Mikroorganismen entfalten.

Unter unerwünschten Mikroorganismen sind im vorliegenden Fall phytopathogene Pilze, Bakterien und Viren zu verstehen. Die erfindungsgemäßen Stoffe können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im Allgemeinen von 1 bis 10 Tage, vorzugsweise 1 bis 7 Tage nach der Behandlung der Pflanzen mit den Wirkstoffen.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Dabei lassen sich die erfindungsgemäßen Wirkstoffkombinationen mit besonders gutem Erfolg zur Bekämpfung von Getreidekrankheiten, wie z.B. gegen Puccinia-Arten und von Krankheiten im Wein-, Obst- und Gemüseanbau, wie z.B. gegen Botrytis-, Venturia- oder Altemaria-Arten, einsetzen.

Die erfindungsgemäßen Wirkstoffkombinationen eignen sich auch zur Steigerung des Emteertrages. Sie sind außerdem mindertoxisch und weisen eine gute Pflanzenverträglichkeit auf.

Die erfindungsgemäßen Wirkstoffkombinationen können gegebenenfalls in bestimmten Konzentrationen und Aufwandmengen auch als Herbizide, zur Beeinflussung des Pflanzenwachstums, sowie zur Bekämpfung von tierischen Schädlingen verwendet werden. Sie lassen sich gegebenenfalls auch als Zwischen- und Vorprodukte für die Synthese weiterer Wirkstoffe einsetzen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein-oder mehrschichtiges Umhüllen. Dabei können die Wirkstoffkombinationen vor der Behandlung durch Mischen der einzelnen Wirkstoffe herstellt werden. Oder die Behandlung erfolgt nacheinander durch Einsatz zunächst eines Phthalamids der Gruppe (1) gefolgt von der Behandlung mit einem Wirkstoff der Gruppen (2) bis (24). Es ist jedoch auch möglich die Pflanzen oder Pflanzenteile zunächst mit einem Wirkstoff der Gruppen (2) bis (24) zu behandeln und die Behandlung mit einem Phthalamid der Gruppe (1) anzuschließen.

Im Materialschutz lassen sich die erfindungsgemäßen Wirkstoffkombinationen zum Schutz von technischen Materialien gegen Befall und Zerstörung durch unerwünschte Mikroorganismen einsetzen.

Unter technischen Materialien sind im vorliegenden Zusammenhang nichtlebende Materialien zu verstehen, die für die Verwendung in der Technik zubereitet worden sind. Beispielsweise können technische Materialien, die durch erfindungsgemäße Wirkstoffe vor mikrobieller Veränderung oder Zerstörung geschützt werden sollen, Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Anstrichmittel, Kühlschmiermittel und Wärmeübertragungsflüssigkeiten genannt, besonders bevorzugt Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffe gegen Pilze, insbesondere Schimmelpilze, holzverfärbende und holzzerstörende Pilze (Basidiomyceten) sowie gegen Schleimorganismen und Algen.

Es seien beispielsweise Mikroorganismen der folgenden Gattungen genannt:

Alternaria, wie Alternaria tenuis,

Aspergillus, wie Aspergillus niger,

Chaetomium, wie Chaetomium globosum,

Coniophora, wie Coniophora puetana,

Lentinus, wie Lentinus tigrinus,

Penicillium, wie Penicillium glaucum,

Polyporus, wie Polyporus versicolor,

Aureobasidium, wie Aureobasidium pullulans,

Sclerophoma, wie Sclerophoma pityophila,

Trichoderma, wie Trichoderma viride,

Escherichia, wie Escherichia coli,

Pseudomonas, wie Pseudomonas aeruginosa,

Staphylococcus, wie Staphylococcus aureus.

Darüber hinaus weisen die erfindungsgemäßen Wirkstoffkombinationen auch sehr gute antimykotische Wirkungen auf. Sie besitzen ein sehr breites antimykotisches Wirkungsspektrum, insbesondere gegen Dermatophyten und Sprosspilze, Schimmel und diphasische Pilze (z.B. gegen Candida-Spezies wie Candida albicans, Candida glabrata) sowie Epidermophyton floccosum, Aspergillus-Spezies wie Aspergillus niger und Aspergillus fumigatus, Trichophyton-Spezies wie Trichophyton mentagrophytes, Microsporon-Spezies wie Microsporon canis und audouinii. Die Aufzählung dieser Pilze stellt keinesfalls eine Beschränkung des erfassbaren mykotischen Spektrums dar, sondern hat nur erläuternden Charakter.

Die Wirkstoffkombinationen können als solche, in Form ihrer Formulierungen oder den daraus bereiteten Anwendungsformen, wie gebrauchsfertige Lösungen, Suspensionen, Spritzpulver, Pasten, lösliche Pulver, Stäubemittel und Granulate angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Beim Einsatz der erfindungsgemäßen Wirkstoffkombinationen als Fungizide können die Aufwandmengen je nach Applikationsart innerhalb eines größeren Bereiches variiert werden. Bei der Behandlung von Pflanzenteilen liegen die Aufwandmengen an Wirkstoff im Allgemeinen zwischen 0,1 und 10.000 g/ha, vorzugsweise zwischen 10 und 1.000 g/ha. Bei der Saatgutbehandlung liegen die Aufwandmengen an Wirkstoff im Allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoff im Allgemeinen zwischen 0,1 und 10.000 g/ha, vorzugsweise zwischen 1 und 5.000 g/ha.

Die aufgeführten Pflanzen können besonders vorteilhaft erfindungsgemäß mit den Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Verbindungen bzw. Mischungen.

Die erfindungsgemäßen Wirkstoffkombinationen eignen sich auch zur Bekämpfung von tierischen Schädlingen, vorzugsweise Arthropoden und Nematoden, insbesondere Nematoden und Insekten, die in der Landwirtschaft, der Tiergesundheit, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp.

Aus der Ordnung der Phthiraptera z.B. Pediculus humanus corporis, Haematopinus spp., Linognathus spp., Trichodectes spp., Damalinia spp.

Aus der Ordnung der Thysanoptera z.B. Hercinothrips femoralis, Thrips tabaci, Thrips palmi, Frankliniella accidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp.

Aus der Ordnung der Siphonaptera z.B. Xenopsylla cheopis, Ceratophyllus spp.

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp.

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp.

Die Wirkstoffkombinationen können in Abhängigkeit von ihren jeweiligen physikalischen und/oder chemischen Eigenschaften in die üblichen Formulierungen überführt werden, wie Lösungen, Emulsionen, Spritzpulver, Suspensionen, Pulver, Schäume, Stäubemittel, Pasten, lösliche Pulver, Granulate, Aerosole, Suspensions-Emulsions-Konzentrate, Wirkstoff-imprägnierte Natur-und synthetische Stoffe, Feinstverkapselungen in polymeren Stoffen und in Hüllmaterialien für Saatgut, sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gew.% Wirkstoff, vorzugsweise zwischen 0,5 und 90 %.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Herbiziden oder mit Düngemitteln und Wachstumsregulatoren ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.% Wirkstoff, vorzugsweise zwischen 0,0001 und 1 Gew.% liegen.

Die Anwendung geschieht in einer den Anwendungsformen angepassten üblichen Weise.

Bei der Anwendung gegen Hygiene- und Vorratsschädlinge zeichnen sich die Wirkstoffkombinationen durch eine hervorragende Residualwirkung auf Holz und Ton sowie durch eine gute Alkalistabilität auf gekälkten Unterlagen aus.

Die erfindungsgemäßen Wirkstoffkombinationen wirken nicht nur gegen Pflanzen-, Hygiene- und Vorratsschädlinge, sondern auch auf dem veterinärmedizinischen Sektor gegen tierische Parasiten (Ektoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp.

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp.

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp.

Aus der Ordnung der Siphonapterida z.B. Pulex spp., Ctenocephalides spp., Xenopsylla spp., Ceratophyllus spp.

Aus der Ordnung der Heteropterida z.B. Cimex spp., Triatoma spp., Rhodnius spp., Panstrongylus spp.

Aus der Ordnung der Blattarida z.B. Blatta orientalis, Periplaneta americana, Blattela germanica, Supella spp.

Aus der Unterklasse der Acaria (Acarida) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp.

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes

spp., Sarcoptes spp., Notoedres spp., Knemidocoptes spp., Cytodites spp., Laminosioptes spp.

Die erfindungsgemäßen Wirkstoffkombinationen eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so dass durch den Einsatz der erfindungsgemäßen Wirkstoffkombinationen eine wirtschaftlichere und einfachere Tierhaltung möglich ist.

Die Anwendung der erfindungsgemäßen Wirkstoffkombinationen geschieht im Veterinärsektor in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pouron und Spot-on), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw.

Bei der Anwendung für Vieh, Geflügel, Haustiere etc. kann man die Wirkstoffkombinationen als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, dass die erfindungsgemäßen Wirkstoffkombinationen eine hohe insektizide Wirkung gegen Insekten zeigen, die technische Materialien zerstören.

Beispielhaft und vorzugsweise - ohne jedoch zu limitieren - seien die folgenden Insekten genannt:

Käfer wie Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus.

Hautflügler wie Sirexjuvencus, Urocerus gigas, Urocerus gigas taignus, Urocerus augur.

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus.

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Ganz besonders bevorzugt handelt es sich bei dem vor Insektenbefall zu schützenden Material um Holz und Holzverarbeitungsprodukte.

Unter Holz und Holzverarbeitungsprodukten, welche durch das erfindungsgemäße Mittel bzw. dieses enthaltende Mischungen geschützt werden kann, ist beispielhaft zu verstehen: Bauholz, Holzbalken, Eisenbahnschwellen, Brückenteile, Bootsstege, Holzfahrzeuge, Kisten, Paletten, Container, Telefonmasten, Holzverkleidungen, Holzfenster und -türen, Sperrholz, Spanplatten, Tischlerarbeiten oder Holzprodukte, die ganz allgemein beim Hausbau oder in der Bautischlerei Verwendung finden.

Die Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Die zum Schutz von Holz und Holzwerkstoffen verwendeten insektiziden Mittel oder Konzentrate enthalten den erfindungsgemäßen Wirkstoff in einer Konzentration von 0,0001 bis 95 Gew.-%, insbesondere 0,001 bis 60 Gew.-%.

Die Menge der eingesetzten Mittel bzw. Konzentrate ist von der Art und dem Vorkommen der Insekten und von dem Medium abhängig. Die optimale Einsatzmenge kann bei der Anwendung jeweils durch Testreihen ermittelt werden. Im allgemeinen ist es jedoch ausreichend 0,0001 bis 20 Gew.%, vorzugsweise 0,001 bis 10 Gew.%, des Wirkstoffs, bezogen auf das zu schützende Material, einzusetzen.

Als Lösungs- und/oder Verdünnungsmittel dient ein organisch-chemisches Lösungsmittel oder Lösungsmittelgemisch und/oder ein öliges oder ölartiges schwer flüchtiges organisch-chemisches Lösungsmittel oder Lösungsmittelgemisch und/oder ein polares organisch-chemisches Lösungsmittel oder Lösungsmittelgemisch und/oder Wasser und gegebenenfalls einen Emulgator und/oder Netzmittel.

Als organisch-chemische Lösungsmittel werden vorzugsweise ölige oder ölartige Lösungsmittel mit einer Verdunstungszahl über 35 und einem Flammpunkt oberhalb 30°C, vorzugsweise oberhalb 45°C, eingesetzt. Als derartige schwerflüchtige, wasserunlösliche, ölige und ölartige Lösungsmittel werden entsprechende Mineralöle oder deren Aromatenfraktionen oder mineralölhaltige Lösungsmittelgemische, vorzugsweise Testbenzin, Petroleum und/oder Alkylbenzol verwendet.

Vorteilhaft gelangen Mineralöle mit einem Siedebereich von 170 bis 220°C, Testbenzin mit einem Siedebereich von 170 bis 220°C, Spindelöl mit einem Siedebereich von 250 bis 350°C, Petroleum bzw. Aromaten vom Siedebereich von 160 bis 280°C, Terpentinöl und dgl. zum Einsatz.

In einer bevorzugten Ausführungsform werden flüssige aliphatische Kohlenwasserstoffe mit einem Siedebereich von 180 bis 210°C oder hoch siedende Gemische von aromatischen und aliphatischen Kohlenwasserstoffen mit einem Siedebereich von 180 bis 220°C und/oder Spindelöl und/oder Monochlornaphthalin, vorzugsweise $\alpha$-Monochlornaphthalin, verwendet.

Die organischen schwerflüchtigen öligen oder ölartigen Lösungsmittel mit einer Verdunstungszahl über 35 und einem Flammpunkt oberhalb 30°C, vorzugsweise oberhalb 45°C, können teilweise durch leicht oder mittelflüchtige organisch-chemische Lösungsmittel ersetzt werden, mit der Maßgabe, dass das Lösungsmittelgemisch ebenfalls eine Verdunstungszahl über 35 und einen Flammpunkt oberhalb 30°C, vorzugsweise oberhalb 45°C, aufweist und dass das Gemisch in diesem Lösungsmittelgemisch löslich oder emulgierbar ist.

Nach einer bevorzugten Ausführungsform wird ein Teil des organisch-chemischen Lösungsmittel oder Lösungsmittelgemisches oder ein aliphatisches polares organisch-chemisches Lösungsmittel oder Lösungsmittelgemisch ersetzt. Vorzugsweise gelangen Hydroxyl- und/oder Ester- und/oder Ethergruppen enthaltende aliphatische organisch-chemische Lösungsmittel wie beispielsweise Glycolether, Ester oder dgl. zur Anwendung.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z.B. Polyvinylacetat, Polyesterharz, Polykondensations- oder Polyadditionsharz, Polyurethanharz, Alkydharz bzw. modifiziertes Alkydharz, Phenolharz, Kohlenwasserstoffharz wie Inden-Cumaronharz, Siliconharz, trocknende pflanzliche und/oder trocknende Öle und/oder physikalisch trocknende Bindemittel auf der Basis eines Natur- und/oder Kunstharzes verwendet.

Das als Bindemittel verwendete Kunstharz kann in Form einer Emulsion, Dispersion oder Lösung, eingesetzt werden. Als Bindemittel können auch Bitumen oder bituminöse Substanzen bis zu 10 Gew.%, verwendet werden. Zusätzlich können an sich bekannte Farbstoffe, Pigmente, wasserabweisende Mittel, Geruchskorrigentien und Inhibitoren bzw. Korrosionsschutzmittel und dgl. eingesetzt werden.

Bevorzugt ist gemäß der Erfindung als organisch-chemische Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgehalt von mehr als 45 Gew.%, vorzugsweise 50 bis 68 Gew.%, verwendet.

Das erwähnte Bindemittel kann ganz oder teilweise durch ein Fixierungsmittel(gemisch) oder ein Weichmacher (gemisch) ersetzt werden. Diese Zusätze sollen einer Verflüchtigung der Wirkstoffe sowie einer Kristallisation bzw. Ausfällen vorbeugen. Vorzugsweise ersetzen sie 0,01 bis 30 % des Bindemittels (bezogen auf 100 % des eingesetzten Bindemittels).

Die Weichmacher stammen aus den chemischen Klassen der Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat oder Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylenbenzophenon.

Als Lösungs- bzw. Verdünnungsmittel kommt insbesondere auch Wasser in Frage, gegebenenfalls in Mischung mit einem oder mehreren der oben genannten organisch-chemischen Lösungs- bzw. Verdünnungsmittel, Emulgatoren und Dispergatoren.

Ein besonders effektiver Holzschutz wird durch großtechnische Imprägnierverfahren, z.B. Vakuum, Doppelvakuum oder Druckverfahren, erzielt.

Zugleich können die erfindungsgemäßen Wirkstoffkombinationen zum Schutz vor Bewuchs von Gegenständen, insbesondere von Schiffskörpern, Sieben, Netzen, Bauwerken, Kaianlagen und Signalanlagen, welche mit See- oder Brackwasser in Verbindung kommen, eingesetzt werden.

Bewuchs durch sessile Oligochaeten, wie Kalkröhrenwürmer sowie durch Muscheln und Arten der Gruppe Ledamorpha (Entenmuscheln), wie verschiedene Lepas- und Scalpellum-Arten, oder durch Arten der Gruppe Balanomorpha (Seepocken), wie Balanus- oder Pollicipes-Species, erhöht den Reibungswiderstand von Schiffen und führt

in der Folge durch erhöhten Energieverbrauch und darüber hinaus durch häufige Trockendockaufenthalte zu einer deutlichen Steigerung der Betriebskosten.

Neben dem Bewuchs durch Algen, beispielsweise Ectocarpus sp. und Ceramium sp., kommt insbesondere dem Bewuchs durch sessile Entomostraken-Gruppen, welche unter dem Namen Cirripedia (Rankenflußkrebse) zusammengefaßt werden, besondere Bedeutung zu.

Es wurde nun überraschenderweise gefunden, dass die erfindungsgemäßen Wirkstoffkombinationen eine hervorragende Antifouling (Antibewuchs)-Wirkung aufweisen.

Durch Einsatz der erfindungsgemäßen Wirkstoffkombinationen kann auf den Einsatz von Schwermetallen wie z.B. in Bis(trialkylzinn)-sulfiden, Tri-n-butylzinnlaurat, Tri-n-butylzinnchlorid, Kupfer(I)-oxid, Triethylzinnchlorid, Tri-n-butyl(2-phenyl-4-chlorphenoxy)-zinn, Tributylzinnoxid, Molybdändisulfid, Antimonoxid, polymerem Butyltitanat, Phenyl-(bispyridin)-wismutchlorid, Tri-n-butylzinnfluorid, Manganethylenbisthiocarbamat, Zinkdimethyldithiocarbamat, Zinkethylenbisthiocarbamat, Zink- und Kupfersalze von 2-Pyridinthiol-1-oxid, Bisdimethyldithiocarbamoylzinkethylenbisthiocarbamat, Zinkoxid, Kupfer(I)-ethylen-bisdithiocarbamat, Kupferthiocyanat, Kupfernaphthenat und Tributylzinnhalogeniden verzichtet werden oder die Konzentration dieser Verbindungen entscheidend reduziert werden.

Die anwendungsfertigen Antifoulingfarben können gegebenenfalls noch andere Wirkstoffe, vorzugsweise Algizide, Fungizide, Herbizide, Molluskizide bzw. andere Antifouling-Wirkstoffe enthalten.

Als Kombinationspartner für die erfindungsgemäßen Antifouling-Mittel eignen sich vorzugsweise:

Algizide wie 2-*tert.*-Butylamino4-cyclopropylamino-6-methylthio-1,3,5-triazin, Dichlorophen, Diuron, Endothal, Fentinacetat, Isoproturon, Methabenzthiazuron, Oxyfluorfen, Quinoclamine und Terbutryn;

Fungizide wie Benzo[*b*]thiophencarbonsäurecyclohexylamid-S,S-dioxid, Dichlofluanid, Fluorfolpet, 3-Iod-2-propinyl-butylcarbamat, Tolylfluanid und Azole wie z.B. Azaconazole, Cyproconazole, Epoxyconazole, Hexaconazole, Metconazole, Propiconazole und Tebuconazole;

Molluskizide wie Fentinacetat, Metaldehyd, Methiocarb, Niclosamid, Thiodicarb und Trimethacarb;

oder herkömmliche Antifouling-Wirkstoffe wie 4,5-Dichlor-2-octyl-4-isothiazolin-3-on, Diiodmethylparatrylsulfon, 2-(N,N-Dimethylthiocarbamoylthio)-5-nitrothiazyl, Kalium-, Kupfer-, Natrium- und Zinksalze von 2-Pyridinthiol-1-oxid, Pyridin-triphenylboran, Tetrabutyldistannoxan, 2,3,5,6-Tetrachlor-4-(methylsulfonyl)-pyridin, 2,4,5,6-Tetrachloroisophthalonitril, Tetramethylthiuramdisulfid und 2,4,6-Trichlorphenylmaleinimid.

Die verwendeten Antifouling-Mittel enthalten die erfindungsgemäßen Wirkstoffkombinationen in einer Konzentration von 0,001 bis 50 Gew.%, insbesondere von 0,01 bis 20 Gew.-%.

Die erfindungsgemäßen Antifouling-Mittel enthalten desweiteren die üblichen Bestandteile wie z.B. in Ungerer, Chem. Ind. 1985, 37, 730-732 und Williams, Antifouling Marine Coatings, Noyes, Park Ridge, 1973 beschrieben.

Antifouling-Anstrichmittel enthalten neben den algiziden, fungiziden, molluskiziden und erfindungsgemäßen insektiziden Wirkstoffen insbesondere Bindemittel.

Beispiele für anerkannte Bindemittel sind Polyvinylchlorid in einem Lösungsmittelsystem, chlorierter Kautschuk in einem Lösungsmittelsystem, Acrylharze in einem Lösungsmittelsystem insbesondere in einem wässrigen System, Vinylchlorid/Vinylacetat-Copolymersysteme in Form wäßriger Dispersionen oder in Form von organischen Lösungsmittelsystemen, Butadien/Styrol/Acrylnitril-Kautschuke, trocknende Öle, wie Leinsamenöl, Harzester oder modifizierte Hartharze in Kombination mit Teer oder Bitumina, Asphalt sowie Epoxyverbindungen, geringe Mengen Chlorkautschuk, chloriertes Polypropylen und Vinylharze.

Gegebenenfalls enthalten Anstrichmittel auch anorganische Pigmente, organische Pigmente oder Farbstoffe, welche vorzugsweise in Seewasser unlöslich sind. Ferner können Anstrichmittel Materialien, wie Kolophonium enthalten, um eine gesteuerte Freisetzung der Wirkstoffe zu ermöglichen. Die Anstriche können ferner Weichmacher, die rheologischen Eigenschaften beeinflussende Modifizierungsmittel sowie andere herkömmliche Bestandteile enthalten. Auch in Self-Polishing-Antifouling-Systemen können die erfindungsgemäßen Verbindungen oder die oben genannten Mischungen eingearbeitet werden.

Die Wirkstoffkombinationen eignen sich auch zur Bekämpfung von tierischen Schädlingen, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge in Haushaltsinsektizid-Produkten verwendet werden. Sie sind gegen sensible und resistente Arten sowie gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Ornithodorus moubat, Rhipicephalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp.

Aus der Ordnung der Chilopoda z.B. Geophilus spp.

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura, z.B. Pediculus humanus capitis, Pediculus humanus corporis, Phthirus pubis.

Aus der Ordnung der Heteroptera z.B. Cimex hemipterus, Cimex lectularius, Rhodinus prolixus, Triatoma infestans.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gel- und Membranverdampfern, propellergetriebenen Verdampfern, energielosen bzw. passiven Verdampfungssystemen, Mottenpapieren, Mottensäckchen und Mottengelen, als Granulate oder Stäube, in Streuködem oder Köderstationen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft, Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhiozome, Ableger und Samen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise emiedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Emährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus *Bacillus thuringiensis* (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Wirkstoffmischungen behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die gute insektizide und fungizide Wirkung der erfindungsgemäßen Wirkstoffkombinationen geht aus den nachfolgenden Beispielen hervor. Während die einzelnen Wirkstoffe in ihrer Wirkung Schwächen aufweisen, zeigen die Kombinationen eine Wirkung, die über eine einfache Wirkungssummierung hinausgeht.

Ein synergistischer Effekt liegt bei Insektiziden und Fungiziden immer dann vor, wenn die insektizide bzw. fungizide Wirkung der Wirkstoffkombinationen größer ist als die Summe der Wirkungen der einzeln applizierten Wirkstoffe.

Die zu erwartende insektizide oder fungizide Wirkung für eine gegebene Kombination zweier Wirkstoffe kann nach S.R Colby ("Calculating Synergistic and Antagonistic Responses of Herbicide Combinations", Weeds 1967, 15, 20-22) wie folgt berechnet werden:

Wenn

X den *Abtötungsgrad* bzw. *Wirkungsgrad,* ausgedrückt in % der unbehandelten Kontrolle, beim Einsatz des Wirkstoffes A in einer Aufwandmenge von *m ppm* bzw. *g/ha* bedeutet,

Y den *Abtötungsgrad* bzw. *Wirkungsgrad,* ausgedrückt in % der unbehandelten Kontrolle, beim Einsatz des Wirkstoffes B in einer Aufwandmenge von *n ppm* bzw. *g/ha* bedeutet und

E den *Abtötungsgrad* bzw. *Wirkungsgrad,* ausgedrückt in % der unbehandelten Kontrolle, beim Einsatz der Wirkstoffe A und B in Aufwandmengen von *m und n ppm* bzw. *g/ha* bedeutet,

dann ist

$$E = X + Y - \frac{X \times Y}{100}$$

Dabei wird der Abtötungsgrad bzw. Wirkungsgrad in % ermittelt. Es bedeutet 0 % ein Abtötungsgrad bzw. Wirkungsgrad, der demjenigen der Kontrolle entspricht, während ein Abtötungsgrad von 100 % bedeutet, dass alle Tiere tot sind und ein Wirkungsgrad von 100 % bedeutet, dass kein Befall beobachtet wird.

Ist die tatsächliche fungizide oder insektizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

Beispiel **A**

**Aphis gossypii -Test**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Baumwollblätter (*Gossypium hirsutum*), die stark von der Baumwollblattlaus (*Aphis gossypii*) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel (siehe Blatt 1).

Bei diesem Test zeigen z. B. die folgenden Wirkstoffkombinationen gemäß vorliegender Anmeldung eine synergistisch verstärkte Wirksamkeit im Vergleich zu den einzeln angewendeten Wirkstoffen:

Tabelle A, Seite 1

| Pflanzenschädigende Insekten<br>**Aphis gossypü - Test** | | | |
|---|---|---|---|
| **Wirkstoff** | **Konzentration in ppm** | **Abtötung in % nach 1d** | |
| **Verbindung (Ib)** | **0,8** | **30** | |
| **Metalaxyl** | **100** | **10** | |
| **Verbindung (Ib) + Metalaxyl (1 : 125)** erfindungsgemäß | **0,8 + 100** | **gef.*** **60** | **ber.**** **37** |
| * gef. = gefundene Wirkung<br>** ber. = nach der Colby-Formel berechnete Wirkung | | | |

Tabelle A, Seite 2

| Pflanzenschädigende Insekten<br>**Aphis gossypii - Test** | | | |
|---|---|---|---|
| **Wirkstoff** | **Konzentration in ppm** | **Abtötung in % nach 6$^{d}$** | |
| **Verbindung (Ia)** | **0,8**<br>**0,16** | **70**<br>**40** | |
| **Verbindung (Ib)** | **0,8** | **40** | |
| **Fludioxonil** | **100** | **0** | |
| **Verbindung (Ia) + Fludioxonil (1 : 125) erfindungsgemäß** | **0,8 + 100** | **gef.***<br>**95** | **ber.****<br>**70** |
| **Trifloxystrobin** | **100** | **40** | |
| **Verbindung (Ia) + Trifloxystrobin (1:125) erfindungsgemäß** | **0,8 + 100**<br>**0,16 + 100** | **gef.***<br>**95**<br>**80** | **ber.****<br>**82**<br>**64** |
| **Verbindung (Ib) + Trifloxystrobin (1 : 125)** erfindungsgemäß | **0,8 +100** | **gef.***<br>**95** | **ber.****<br>**64** |
| * gef. = gefundene Wirkung<br>** ber. = nach der Colby-Formel berechnete Wirkung | | | |

Beispiel **B**

**Myzus persicae -Test**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*), die stark von der Grünen Pfirsichblattlaus (*Myzus persicae*) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel (siehe Blatt 1).

Bei diesem Test zeigen z. B. die folgenden Wirkstoffkombinationen gemäß vorliegender Anmeldung eine synergistisch verstärkte Wirksamkeit im Vergleich zu den einzeln angewendeten Wirkstoffen:

Tabelle B, Seite 1

| Pflanzenschädigende Insekten<br>**Myzus persicae - Test** | | | |
|---|---|---|---|
| **Wirkstoff** | **Konzentration in ppm** | **Abtötung in % nach 1[d]** | |
| **Verbindung (Ia)** | **0,8**<br>**0,16** | **40**<br>**0** | |
| **Verbindung (Ib)** | **4** | **75** | |
| **Fludioxonil** | **100** | **0** | |
| **Verbindung (Ia) + Fludioxonil (1 : 625) erfindungsgemäß** | **0,16 + 100** | **gef.***<br>**30** | **ber.****<br>**0** |
| **Metalaxyl** | **100** | **0** | |
| **Verbindung (Ia) + Metalaxyl (1:125) erfindungsgemäß** | **0,8 +100** | **gef.***<br>**70** | **ber.****<br>**40** |
| **Prothioconazole** | **100** | **0** | |
| **Verbindung (Ib) + Prothioconazole (1:25)** erfindungsgemäß | **4 + 100** | **gef.***<br>**95** | **ber.****<br>**75** |
| * gef. = gefundene Wirkung<br>** ber. = nach der Colby-Formel berechnete Wirkung | | | |

Tabelle B, Seite 2

| Pflanzenschädigende Insekten<br>**Myzus persicae - Test** | | | |
|---|---|---|---|
| **Wirkstoff** | **Konzentration in ppm** | **Abtötung in % nach 6[d]** | |
| **Verbindung (Ia)** | **0,8** | **75** | |
| **Prothioconazole** | **100** | **0** | |
| **Verbindung (Ia) + Prothioconazole (1 : 125) erfindungsgemäß** | **0,8 + 100** | **gef.***<br>**98** | **ber.****<br>**75** |
| * gef. = gefundene Wirkung<br>** ber. = nach der Colby-Formel berechnete Wirkung | | | |

Beispiel **C**

**Phaedon cochleariae -Test**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*) werden durch Tauchen in die Wirkstoffzubereitung der gewünschten Konzentration behandelt und mit Larven des Meerrettichblattkäfers (*Phaedon cochleariae*) besetzt, solange die Blätter noch feucht sind.

Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden. Die ermittelten Abtötungswerte verrechnet man nach der Colby-Formel ( siehe Blatt 1).

Bei diesem Test zeigen z. B. die folgenden Wirkstoffkombinationen gemäß vorliegender Anmeldung eine synergistisch verstärkte Wirksamkeit im Vergleich zu den einzeln angewendeten Wirkstoffen:

Tabelle C, Seite 1

| Pflanzenschädigende Insekten<br>**Phaedon cochleariae - Test** | | | |
|---|---|---|---|
| **Wirkstoff** | **Konzentration in ppm** | **Abtötung in %** | **nach 3d** |
| **Verbindung (Ib)** | **200** | **60** | |
| **Propamocarb** | **200** | **5** | |
| **Verbindung (Ib) + Propamocarb (1 : 1)** erfindungsgemäß | **200 + 200** | **gef.*** **80** | **ber.**** **62** |
| * gef. = gefundene Wirkung<br>** ber. = nach der Colby-Formel berechnete Wirkung | | | |

**Patentansprüche**

**1.** Wirkstoffkombinationen enthaltend

(a) mindestens einen Wirkstoff der Gruppe (1) gemäß der Formel (I)

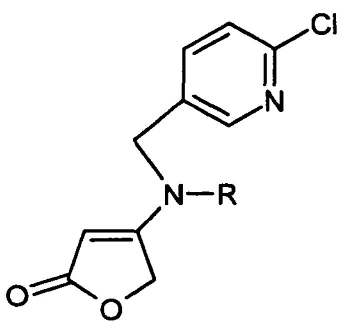

(I)

wobei

R für Methyl oder Cyclopropyl steht,

und

(b) mindestens einen Wirkstoff ausgewählt unter den Strobilurinen der Gruppe (2), den Triazolen der Gruppe (3), den Acylalaninen der Gruppe (8), den Carbamaten der Gruppe (11) und den Pyrrolen der Gruppe (16) ausgewählt ist, wobei

die Gruppe (2) folgende Strobilurin-Wirkstoffe umfasst: Azoxystrobin, Fluoxastrobin, (2*E*)-2-(2-{[6-(3-Chlor-2-methylphenoxy)-5-fluor-4-pyrimidinyl]-oxy}phenyl)-2-(methoxyimino)-N-methylethanamid, Trifloxystrobin, (2*E*)-2-(Methoxyimino)-*N*-methyl-2-(2-{[({(1*E*)-1-[3-(trifluormethyl)phenyl]ethyliden}amino)-oxy]methyl}phenyl) ethanamid, (2*E*)-2-(Methoxyimino)-*N*-methyl-2-{2-[(*E*)-({1-[3-(trifluormethyl)phenyl]ethoxy}imino)methyl]phenyl}ethanamid, Orysastrobin, 5-Methoxy-2-methyl-4-(2-{[({(1*E*)-1-[3-(trifluormethyl)phenyl]ethyliden}amino) oxy]methyl}phenyl)-2,4-dihydro-3*H*-1,2,4triazol-3-on, Kresoxim-methyl, Dimoxystrobin, Picoxystrobin, Pyraclostrobin und Metominostrobin;

die Gruppe (3) folgende Triazol-Wirkstoffe umfasst: Azaconazole, Etaconazole, Propiconazole, Difenoconazole, Bromuconazole, Cyproconazole, Hexaconazole, Penconazole, Myclobutanil, Tetraconazole, Flutriafol, Epoxiconazole, Flusilazole, Simeconazole, Prothioconazole, Fenbuconazole, Tebuconazole, Ipconazole, Metconazole, Triticonazole, Bitertanol, Triadimenol, Triadimefon, Fluquinconazole und Quinconazole;

die Gruppe (8) folgende Acylalanin-Wirkstoffe umfasst: Benalaxyl, Furalaxyl, Metalaxyl, Metalaxyl-M und Benalaxyl-M;

die Gruppe (11) folgende Carbamate-Wirkstoffe umfasst: Diethofencarb, Propamocarb, Propamocarb-hydrochloride und Propamocarb-Fosetyl; und

die Gruppe (16) folgende Pyrrole-Wirkstoffe umfasst: Fenpiclonil, Fludioxonil, und Pyrrolnitrine.

**2.** Zusammensetzung gemäß Anspruch 1 enthaltend die Verbindung der Formel (Ia)

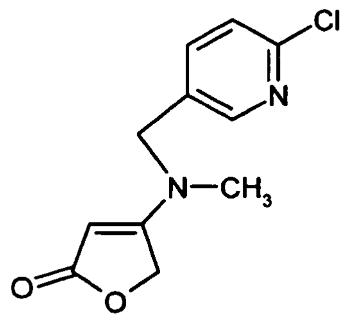

(Ia) .

und mindestens eine der Verbindungen aus folgender Liste

- Azoxystrobin
- Fluoxastrobin
- (2*E*)-2-(2-{[6-(3-Chlor-2-methylphenoxy)-5-fluor-4-pyrimidinyl]oxy}phenyl)-2-(methoxyimino)-*N*-methylethanamid
- Trifloxystrobin
- (2*E*)-2-(Methoxyimino)-*N*-methyl-2-(2-{[({(1*E*)-1-[3-(trifluomethyl)phenyl]ethyliden}-amino)oxy]methyl}phenyl) ethanamid
- (2*E*)-2-(Methoxyimino)-*N*-methyl-2-{2-[(*E*)-({1-[3-(trifluormethyl)phenyl]-ethoxy}imino)methyl]phenyl}ethanamid
- Orysastrobin
- 5-Methoxy-2-methyl-4-(2-{[({(1*E*)-1-[3-(trifluormethyl)phenyl]ethyliden}amino)oxy]-methyl}phenyl)-2,4-dihydro-3*H*-1,2,4-triazol-3-on
- Kresoxim-methyl
- Dimoxystrobin
- Picoxystrobin
- Pyraclostrobin
- Metominostrobin
- Azaconazole
- Etaconazole

- Propiconazole
- Difenoconazole
- Bromuconazole
- Cyproconazole
- Hexaconazole
- Penconazole
- Myclobutanil
- Tetraconazole
- Flutriafol
- Epoxiconazole
- Flusilazole
- Simeconazole
- Prothioconazole
- Fenbuconazole
- Tebuconazole
- Ipconazole
- Metconazole
- Triticonazole
- Bitertanol
- Triadimenol
- Triadimefon
- Fluquinconazole
- Quinconazole
- Benalaxyl
- Furalaxyl
- Metalaxyl
- Metalaxyl-M
- Benalaxyl
- Diethofencarb
- Propamocarb
- Propamocarb-hydrochloride
- Propamocarb-Fosetyl
- Fenpiclonil
- Fludioxonil
- Pyrrolnitrine.

**3.** Zusammensetzung gemäß Anspruch 1 enthaltend die Verbindung der Formel (Ib)

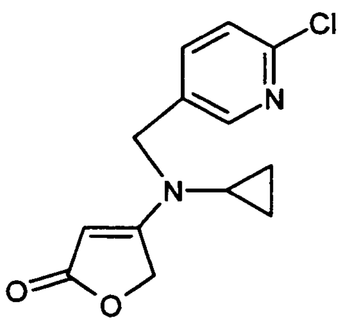

(Ib)

und mindestens eine der Verbindungen aus folgender Liste

- Azoxystrobin
- Fluoxastrobin
- (2*E*)-2-(2-{[6-(3-Chlor-2-methylphenoxy)-5-fluor-4-pyrimidinyl]oxy}phenyl)-2-(methoxyimino)-*N*-methylethanamid
- Trifloxystrobin
- (2*E*)-2-(Methoxyimino)-*N*-methyl-2-(2-{[({(1*E*)-1-[3-(trifluormethyl)phenyl]ethyliden}-amino)oxy]methyl}phenyl)ethanamid
- (2*E*)-2-(Methoxyimino)-*N*-methyl-2-{2-[(*E*)-({1-[3-(trifluormethyl)phenyl]-ethoxy}imino)methyl]phenyl}ethanamid
- Orysastrobin
- 5-Methoxy-2-methyl-4-(2-{[({(1*E*)-1-[3-(trifluormethyl)phenyl]ethyliden}amino)oxy]-methyl}phenyl)-2,4-dihydro-3*H*-1,2,4-triazol-3-on
- Kresoxim-methyl
- Dimoxystrobin
- Picoxystrobin
- Pyraclostrobin
- Metominostrobin
- Azaconazole
- Etaconazole
- Propiconazole
- Difenoconazole
- Bromuconazole
- Cyproconazole
- Hexaconazole
- Penconazole
- Myclobutanil
- Tetraconazole
- Flutriafol
- Epoxiconazole
- Flusilazole
- Simeconazole
- Prothioconazole
- Fenbuconazole
- Tebuconazole
- Ipconazole
- Metconazole
- Triticonazole
- Bitertanol
- Triadimenol
- Triadimefon
- Fluquinconazole
- Quinconazole
- Benalaxyl
- Furalaxyl
- Metalaxyl
- Metalaxyl-M
- Benalaxyl-M
- Diethofencarb
- Propamocarb
- Propamocarb-hydrochloride
- Propamocarb-Fosetyl
- Fenpiclonil
- Fludioxonil
- Pyrrolnitrine.

**4.** Verwendung von Mischungen, wie in Anspruch 1, 2 oder 3 definiert, zur Bekämpfung tierischer Schädlinge.

**5.** Verwendung einer Zusammensetzung gemäß Anspruch 1, 2 oder 3 zur Behandlung von Saatgut.

**6.** Verwendung von Zusammensetzungen gemäß Anspruch 1, 2 oder 3 zur Behandlung von transgenen Pflanzen.

**7.** Verwendung von Zusammensetzungen gemäß Anspruch 1, 2 oder 3 zur Behandlung von Saatgut transgener Pflanzen.

**8.** Saatgut, welches mit einer Zusammensetzung gemäß Anspruch 1, 2 oder 3 behandelt wurde.

**9.** Verfahren zur Bekämpfung von unerwünschten tierischen Schädlingen und/oder pflanzenpathogenen Pilzen, **dadurch gekennzeichnet, dass** man Wirkstoffkombinationen gemäß Anspruch 1, 2 oder 3 auf die unerwünschten tierischen Schädlingen und/oder deren Lebensraum und/oder Saatgut ausbringt.

**10.** Verfahren zur Herstellung insektizider und akarizider Mittel, **dadurch gekennzeichnet, dass** man Mischungen, wie in Anspruch 1, 2 oder 3 definiert, mit Streckmitteln und/oder oberflächenaktiven Stoffen vermischt.

**Claims**

**1.** Active compound combinations comprising

(a) at least one active compound of the group (1) according to the formula (I)

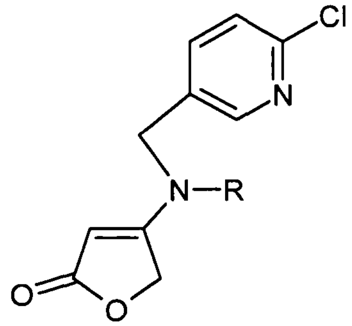

(I)

where

R represents methyl or cyclopropyl,

and

(b) at least one active compound selected from the strobilurins of group (2), the triazoles of group (3), the acylalanines of group (8), the carbamates of group (11) and the pyrroles of group (16), where
group (2) comprises the following active strobilurin compounds: azoxystrobin, fluoxastrobin, (2*E*)-2-(2-{[6-(3-chloro-2-methylphenoxy)-5-fluoro-4-pyrimidinyl]oxy}phenyl)-2-(methoxyimino)-*N*-methylethanamide, trifloxystrobin, (2*E*)-2-(methoxyimino)-*N*-methyl-2-(2-{[({(1*E*)-1-[3-(trifluoromethyl)phenyl]ethylidene}amino)oxy]methyl}phenyl)ethanamide, (*E*)-2-(methoxyimino)-*N*-methyl-2-{2-[(*E*)-({1-[3-(trifluoromethyl)phenyl]ethoxy}imino)methyl]phenyl}ethanamide, orysastrobin, 5-methoxy-2-methyl-4-(2-{[({(1*E*)-1-[3-(trifluoromethyl)phenyl]ethylidene}amino)oxy]methyl}phenyl)-2,4-dihydro-3*H*-1,2,4-triazol-3-one, kresoxim-methyl, dimoxystrobin, picoxystrobin, pyraclostrobin and metominostrobin;
group (3) comprises the following active triazol compounds: azaconazole, etaconazole, propiconazole, difenoconazole, bromuconazole, cyproconazole, hexaconazole, penconazole, myclobutanil, tetraconazole, flutriafol, epoxiconazole, flusilazole, simeconazole, prothioconazole, fenbuconazole, tebuconazole, ipconazole, metconazole, triticonazole, bitertanol, triadimenol, triadimefon, fluquinconazole and quinconazole;
group (8) comprises the following active acylalanine compounds: benalaxyl, furalaxyl, metalaxyl, metalaxyl-M and benalaxyl-M;
group (11) comprises the following active carbamate compounds: diethofencarb, propamocarb, propamocarb-hydrochloride and propamocarb-fosetyl; and group (16) comprises the following active pyrrole compounds: fenpiclonil, fludioxonil and pyrrolnitrines.

**2.** Composition according to Claim 1, comprising the compound of the formula (Ia)

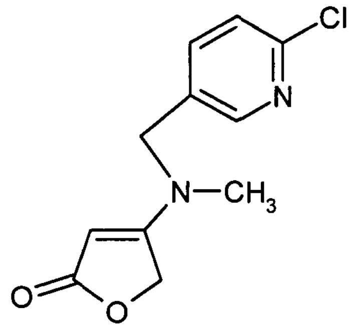

(Ia)

and at least one of the compounds from the list below

- azoxystrobin
- fluoxastrobin
- (2*E*)-2-(2-{[6-(3-chloro-2-methylphenoxy)-5-fluoro-4-pyrimidinyl]oxy}phenyl)-2-(methoxyimino)-*N*-methylethanamide
- trifloxystrobin
- (2*E*)-2-(methoxyimino)-*N*-methyl-2-(2-{[({(1*E*)-1-[3-(trifluoromethyl)-phenyl]ethylidene}amino)oxy]methyl}phenyl)ethanamide
- (2*E*)-2-(methoxyimino)-*N*-methyl-2-{2-[(*E*)-({1-[3-(trifluoromethyl)phenyl]-ethoxy}imino)methyl]phenyl}ethanamide
- orysastrobin
- 5-methoxy-2-methyl-4-(2-{[({(1*E*)-1-[3-(trifluoromethyl)phenyl]ethylidene}-amino)oxy]methyl}phenyl)-2,4-dihydro-3*H*-1,2,4-triazol-3-one
- kresoxim-methyl
- dimoxystrobin
- picoxystrobin
- pyraclostrobin
- metominostrobin
- azaconazole
- etaconazole
- propiconazole
- difenoconazole
- bromuconazole
- cyproconazole
- hexaconazole
- penconazole
- myclobutanil
- tetraconazole
- flutriafol
- epoxiconazole
- flusilazole
- simeconazole
- prothioconazole
- fenbuconazole
- tebuconazole
- ipconazole
- metconazole
- triticonazole
- bitertanol
- triadimenol
- triadimefon
- fluquinconazole
- quinconazole
- benalaxyl
- furalaxyl

- metalaxyl
- metalaxyl-M
- benalaxyl-M
- diethofencarb
- propamocarb
- propamocarb-hydrochloride
- propamocarb-fosetyl
- fenpiclonil
- fludioxonil
- pyrrolnitrins.

**3.** Composition according to Claim 1, comprising the compound of the formula (Ib)

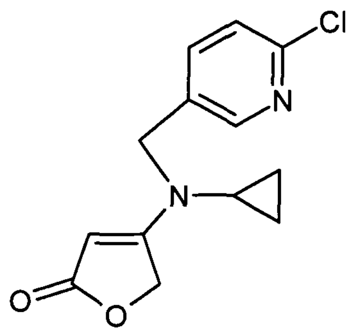

(Ib)

and at least one of the compounds from the list below

- azoxystrobin
- fluoxastrobin
- (2*E*)-2-(2-{[6-(3-chloro-2-methylphenoxy)-5-fluoro-4-pyrimidinyl]oxy}phenyl)-2-(methoxyimino)-*N*-methylethanamide
- trifloxystrobin
- (2*E*)-2-(methoxyimino)-*N*-methyl-2-(2-{[({(1*E*)-1-[3-(trifluoromethyl)-phenyl]ethylidene}amino)oxy]methyl}phenyl)ethanamide
- (2*E*)-2-(methoxyimino)-*N*-methyl-2-12-[(*E*)-({1-[3-(trifluoromethyl)phenyl]-ethoxy}imino)methyl]phenyl}ethanamide
- orysastrobin
- 5-methoxy-2-methyl-4-(2-{[({(1*E*)-1-[3-(trifluoromethyl)phenyl]ethylidene}-amino)oxy]methyl}phenyl)-2,4-dihydro-3*H*-1,2,4-triazol-3-one
- kresoxim-methyl
- dimoxystrobin
- picoxystrobin
- pyraclostrobin
- metominostrobin
- azaconazole
- etaconazole
- propiconazole
- difenoconazole
- bromuconazole
- cyproconazole
- hexaconazole
- penconazole
- myclobutanil
- tetraconazole
- flutriafol
- epoxiconazole
- flusilazole
- simeconazole

- prothioconazole
- fenbuconazole
- tebuconazole
- ipconazole
- metconazole
- triticonazole
- bitertanol
- triadimenol
- triadimefon
- fluquinconazole
- quinconazole
- benalaxyl
- furalaxyl
- metalaxyl
- metalaxyl-M
- benalaxyl-M
- diethofencarb
- propamocarb
- propamocarb-hydrochloride
- propamocarb-fosetyl
- fenpiclonil
- fludioxonil
- pyrrolnitrins.

**4.** Use of mixtures, as defined in any of Claims 1-3, for controlling animal pests.

**5.** Use of a composition according to any of Claims 1-3 for treating seed.

**6.** Use of compositions according to any of Claims 1-3 for treating transgenic plants.

**7.** Use of compositions according to any of Claims 1-3 for treating seed of transgenic plants.

**8.** Seed treated with a composition according to any of Claims 1-3.

**9.** Method for controlling unwanted animal pests and/or phytopathogenic fungi, **characterized in that** active compound combinations, as defined in any of Claims 1-3, are applied to the unwanted animal pests and/or their habitat and/or seed.

**10.** Process for preparing insecticidal and acaricidal compositions, **characterized in that** mixtures, as defined in any of Claims 1-3, are mixed with extenders and/or surfactants.

**Revendications**

**1.** Associations de substances actives, contenant

(a) au moins une substance active du groupe (1) selon la formule (I)

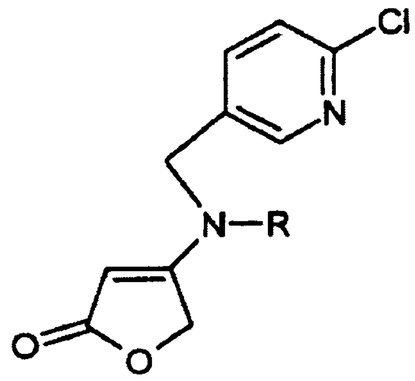

(I)

dans laquelle

R représente le groupe méthyle ou cyclopropyle,

et
(b) au moins une substance active choisie parmi les strobilurines du groupe (2), les triazoles du groupe (3), les acylalanines du groupe (8), les carbamates du groupe (11) et les pyrroles du groupe (16),
le groupe (2) comprenant les substances actives de type strobilurine suivantes : azoxystrobine, fluoxastrobine, (2*E*)-2-(2-{[6-(3-chloro-2-méthyl-phénoxy)-5-fluoro-4-pyrimidinyl]oxy}phényl)-2-(méthoxyimino)-*N*-méthyléthanamide, trifloxystrobine, (2*E*)-2-(méthoxyimino)-*N*-méthyl-2-(2-{[({(1*E*)-1-[3-(trifluorométhyl)phényl]-éthylidène}amino)oxy]méthyl}phényl)éthanamide, (2*E*)-2-(méthoxyimino)-*N*-méthyl-2-{2-[(*E*)-({1-[3-(trifluorométhyl) phényl]éthoxy}imino)méthyl]-phényl}éthanamide, orysastrobine, 5-méthoxy-2-méthyl-4-(2-{[({(1*E*)-1-[3-(trifluorométhyl)-phényl]éthylidène}amino)oxy]méthyl}phényl)-2,4-dihydro-3*H*-1,2,4-triazol-3-one, krésoxime-méthyle, dimoxystrobine, picoxystrobine, pyraclostrobine et métominostrobine ;
le groupe (3) comprenant les substances actives de type triazole suivantes : azaconazole, étaconazole, propiconazole, difénoconazole, bromuconazole, cyproconazole, hexaconazole, penconazole, myclobutanil, tétraconazole, flutriafol, époxiconazole, flusilazole, siméconazole, prothioconazole, fenbuconazole, tébuconazole, ipconazole, metconazole, triticonazole, bitertanol, triadiménol, triadiméfon, fluquinconazole et quinconazole ;
le groupe (8) comprenant les substances actives de type acylalanine suivantes : bénalaxyl, furalaxyl, métalaxyl, métalaxyl-M et bénalaxyl-M ;
le groupe (11) comprenant les substances actives de type carbamate suivantes : diéthofencarbe, propamocarbe, propamocarbe-chlorhydrate et propamocarbe-fosétyl ; et
le groupe (16) comprenant les substances actives de type pyrrole suivantes : fenpiclonil, fludioxonil, et pyrrolnitrines.

**2.** Compositions selon la revendication 1, contenant le composé de formule (Ia)

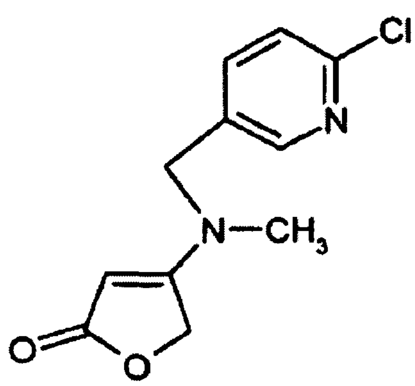

(Ia)

et au moins l'un des composés de la liste suivante

- azoxystrobine

- fluoxastrobine
- (2*E*)-2-(2-{[6-(3-chloro-2-méthylphénoxy)-5-fluoro-4-pyrimidinyl]oxy}phényl)-2-(méthoxyimino)-*N*-méthyléthanamide
- trifloxystrobine
- (2*E*)-2-(méthoxyimino)-*N*-méthyl-2-(2-{[({(1*E*)-1-[3-(trifluorométhyl)phényl]éthylidène}amino)oxy]-méthyl}phényl)éthanamide
- (2*E*)-2-(méthoxyimino)-*N*-méthyl-2-{2-[(*E*)-({1-[3-(trifluorométhyl)phényl]éthoxy}imino)méthyl]-phényl}éthanamide
- orysastrobine
- 5-méthoxy-2-méthyl-4-(2-{[({(1*E*)-1-[3-(trifluorométhyl)phényl]éthylidène}amino)oxy]-méthyl}phényl)-2,4-dihydro-3*H*-1,2,4-triazol-3-one
- krésoxime-méthyle
- dimoxystrobine
- picoxystrobine
- pyraclostrobine
- métominostrobine
- azaconazole
- étaconazole
- propiconazole
- difénoconazole
- bromuconazole
- cyproconazole
- hexaconazole
- penconazole
- myclobutanil
- tétraconazole
- flutriafol
- époxiconazole
- flusilazole
- siméconazole
- prothioconazole
- fenbuconazole
- tébuconazole
- ipconazole
- metconazole
- triticonazole
- bitertanol
- triadiménol
- triadiméfon
- fluquinconazole
- quinconazole
- bénalaxyl
- furalaxyl
- métalaxyl
- métalaxyl-M
- bénalaxyl
- diéthofencarbe
- propamocarbe
- propamocarbe-chlorhydrate
- propamocarbe-fosétyl
- fenpiclonil
- fludioxonil
- pyrrolnitrine.

**3.** Compositions selon la revendication 1, contenant le composé de formule (Ib)

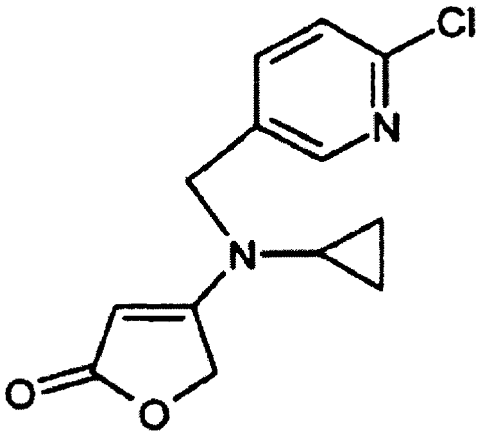

(Ib)

et au moins l'un des composés de la liste suivante

- azoxystrobine
- fluoxastrobine
- (2*E*)-2-(2-{[6-(3-chloro-2-méthylphénoxy)-5-fluoro-4-pyrimidinyl]oxy}phényl)-2-(méthoxyimino)-*N*-méthyléthanamide
- trifloxystrobine
- (2*E*)-2-(méthoxyimino)-*N*-méthyl-2-(2-{[({(1*E*)-1-[3-(trifluorométhyl)phényl]éthylidène}amino)oxy]-méthyl}phényl)éthanamide
- (2*E*)-2-(méthoxyimino)-*N*-méthyl-2-{2-[(*E*)-({1-[3-(trifluorométhyl)phényl]éthoxy}imino)méthyl]-phényl}éthanamide
- orysastrobine
- 5-méthoxy-2-méthyl-4-(2-{[({(1*E*)-1-[3-(trifluorométhyl)phényl]éthylidène}amino)oxy]-méthyl}phényl)-2,4-dihydro-3*H*-1,2,4-triazol-3-one
- krésoxime-méthyle
- dimoxystrobine
- picoxystrobine
- pyraclostrobine
- métominostrobine
- azaconazole
- étaconazole
- propiconazole
- difénoconazole
- bromuconazole
- cyproconazole
- hexaconazole
- penconazole
- myclobutanil
- tétraconazole
- flutriafol
- époxiconazole
- flusilazole
- siméconazole
- prothioconazole
- fenbuconazole
- tébuconazole
- ipconazole
- metconazole
- triticonazole
- bitertanol
- triadiménol
- triadiméfon

- fluquinconazole
- quinconazole
- bénalaxyl
- furalaxyl
- métalaxyl
- métalaxyl-M
- bénalaxyl-M
- diéthofencarbe
- propamocarbe
- propamocarbe-chlorhydrate
- propamocarbe-fosétyl
- fenpiclonil
- fludioxonil
- pyrrolnitrine.

**4.** Utilisation de mélanges, tels que définis dans la revendication 1, 2 ou 3, pour la lutte contre des ravageurs animaux.

**5.** Utilisation d'une composition selon la revendication 1, 2 ou 3, pour le traitement de semences.

**6.** Utilisation de compositions selon la revendication 1, 2 ou 3, pour le traitement de plantes transgéniques.

**7.** Utilisation de compositions selon la revendication 1, 2 ou 3, pour le traitement de semences de plantes transgéniques.

**8.** Semence, qui a été traitée par une composition selon la revendication 1, 2 ou 3.

**9.** Procédé pour la lutte contre des ravageurs animaux et/ou des champignons phytopathogènes indésirables, **caractérisé en ce qu'**on applique des associations de substances actives selon la revendication 1, 2 ou 3 sur les ravageurs animaux indésirables et/ou leur habitat et/ou des semences.

**10.** Procédé pour la préparation de compositions insecticides et/ou acaricides, **caractérisé en ce qu'**on mélange des mélanges, tels que définis dans la revendication 1, 2 ou 3, avec des excipients et/ou des substances tensioactives.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0539588 A1
- WO 2006037475 A
- EP 0040345 A
- DE 2201063 A
- DE 2324010 A
- EP 0382375 A
- EP 0515901 A
- DE 2732257 B2
- WO 9706171 A
- DE 19646407 A1
- EP 712396 B
- DE 19602095 A
- DE 19646407 A
- EP 0712396 B
- EP 0460575 A
- EP 0569384 A
- EP 0596254 A
- DE 19539324 A
- WO 9823155 A
- EP 0253213 A
- EP 0398692 A
- EP 0278595 A
- DE 4423612 A
- DE 2551560 A
- EP 0112284 A
- EP 0258161 A
- DE 3406993 A
- DE 3042303 A
- DE 2735872 A
- EP 0145294 A
- EP 0234242 A
- EP 0015756 A
- EP 0196038 A
- EP 0068813 A
- EP 0537957 A
- WO 9616048 A
- DE 3721786 A
- EP 0329397 A
- EP 0378953 A
- EP 0183458 A
- DE 2903612 A
- DE 2513732 A
- DE 2515091 A
- WO 9601559 A
- EP 0078663 A
- US 3513241 A
- EP 0236272 A
- EP 0206999 A
- JP 6525876 B
- US 4272417 A
- US 4245432 A
- US 4808430 A
- US 5876739 A
- US 20030176428 A1
- WO 2002080675 A1
- WO 2002028186 A2


### In der Beschreibung aufgeführte Nicht-Patentliteratur


- Pesticide Manual. 1991, 249, 827
- **UNGERER.** *Chem. Ind.,* 1985, vol. 37, 730-732
- **WILLIAMS.** Antifouling Marine Coatings. Noyes, 1973
- **S.R COLBY.** Calculating Synergistic and Antagonistic Responses of Herbicide Combinations. *Weeds,* 1967, vol. 15, 20-22